(19)

Europäisches
Patentamt
European
Patent Office
Office européen
des brevets

(11) **EP 4 598 246 A1**

(12) **EUROPEAN PATENT APPLICATION**
published in accordance with Art. 153(4) EPC

(43) Date of publication:
**06.08.2025 Bulletin 2025/32**

(21) Application number: **23872948.7**

(22) Date of filing: **21.09.2023**

(51) International Patent Classification (IPC):
$H04W\ 74/08^{(2024.01)}$    $H04W\ 72/25^{(2023.01)}$
$H04W\ 24/08^{(2009.01)}$    $H04L\ 1/18^{(2023.01)}$
$H04W\ 92/18^{(2009.01)}$    $H04W\ 72/20^{(2023.01)}$
$H04W\ 72/12^{(2023.01)}$

(52) Cooperative Patent Classification (CPC):
**H04L 1/18; H04W 24/08; H04W 72/12;
H04W 72/20; H04W 72/25; H04W 74/08;
H04W 92/18**

(86) International application number:
**PCT/KR2023/014389**

(87) International publication number:
**WO 2024/071831 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022 KR 20220121708
03.11.2022 KR 20220145403
17.02.2023 KR 20230021507
07.07.2023 KR 20230088103
25.07.2023 KR 20230096588**

(71) Applicant: **Electronics and Telecommunications
Research Institute
Daejeon 34129 (KR)**

(72) Inventors:
• **JUNG, Hoi Yoon**
  **Daejeon 34129 (KR)**
• **PARK, Sung Ik**
  **Daejeon 34129 (KR)**
• **UM, Jung Sun**
  **Daejeon 34129 (KR)**
• **HUR, Nam Ho**
  **Daejeon 34129 (KR)**

(74) Representative: **Betten & Resch
Patent- und Rechtsanwälte PartGmbB
Maximiliansplatz 14
80333 München (DE)**

(54) **METHOD AND DEVICE FOR CHANNEL ACCESS IN SIDELINK COMMUNICATION**

(57)    A method and a device for channel access in sidelink communication are disclosed. A method of a first terminal comprises the steps of: initiating a COT; performing groupcast SL transmission within the COT; receiving one or more HARQ-ACK feedbacks for the groupcast SL transmission; when a ratio threshold is configured for the first terminal, calculating an ACK ratio on the basis of the one or more HARQ-ACK feedbacks; and adjusting a CW on the basis of a result of comparison between the ACK ratio and the ratio threshold.

【FIG. 9】

**Description**

[Technical Field]

The present disclosure relates to a channel access technique in a communication system, and more particularly, to a channel access technique for sidelink communication.

[Background Art]

With the advancement of information and communication technology, various wireless communication technologies are being developed. The representative wireless communication technologies may be long term evolution (LTE), LTE-advanced (LTE-A), new radio (NR), and the like specified as the 3$^{rd}$ generation partnership project (3GPP) standards. The LTE and/or LTE-A may be 4$^{th}$ generation (4G) communication technology. The NR may be a 5$^{th}$ generation (5G) communication technology.

The 5G communication system (e.g., communication system supporting the NR) using a higher frequency band (e.g., a frequency band of 6GHz or above) than a frequency band (e.g., a frequency band of 6GHz or below) of the 4G communication system is being considered for processing of soaring wireless data after commercialization of the 4G communication system (e.g., communication system supporting the LTE and/or LTE-A). The 5G communication system may support enhanced Mobile BroadBand (eMBB), Ultra Reliable Low Latency Communication (URLLC), and/or Massive Machine Type Communication (mMTC).

The 5G communication system may support sidelink communication. In sidelink communication, communication can be performed between terminals. For example, a first terminal may transmit signals, information, and/or data to a second terminal, and the second terminal may receive the signals, information, and/or data from the first terminal. Channels for sidelink communication may be a physical sidelink broadcast channel (PSBCH), physical sidelink shared channel (PSSCH), physical sidelink control channel (PSCCH), and/or physical sidelink feedback channel (PSFCH).

The 5G communication system can support unlicensed band communication. An unlicensed band may be shared by multiple communication systems. To ensure fairness in using the unlicensed band, a channel access procedure may be required. The 5G communication system can support sidelink communication in an unlicensed band. In this case, a sidelink channel access procedure for a terminal to use the unlicensed band may be required.

Meanwhile, the above-described technologies are described to enhance the understanding of the background of the present disclosure, and they may include non-prior arts that are not already known to those of ordinary skill in the art.

[Disclosure]

[Technical Problem]

The present disclosure is directed to providing a method and an apparatus for channel access in sidelink communication.

[Technical Solution]

A method of a first terminal, according to exemplary embodiments of the present disclosure for achieving the above-described objective, may comprise: initiating a channel occupancy time (COT); performing groupcast sidelink (SL) transmission within the COT; receiving one or more hybrid automatic repeat request-acknowledgement (HARQ-ACK) feedbacks for the groupcast SL transmission; in response to a ratio threshold being configured to the first terminal, calculating an ACK ratio based on the one or more HARQ-ACK feedbacks; and adjusting a content window (CW) based on a comparison result between the ACK ratio and the ratio threshold.

The one or more HARQ-ACK feedbacks considered for adjustment of the CW may be one or more HARQ-ACK feedbacks for the groupcast SL transmission performed within a most recent COT initiated by the first terminal among COTs.

The one or more HARQ-ACK feedbacks considered for adjustment of the CW may be one or more HARQ-ACK feedbacks for the groupcast SL transmission performed in a reference duration within a most recent COT initiated by the first terminal among COTs.

HARQ-ACK feedbacks for the groupcast SL transmission may be enabled.

The one or more HARQ-ACK feedbacks may be received on physical sidelink feedback channel(s) (PSFCH(s)) within a same slot.

The adjusting of the CW may comprise: changing the CW to a minimum CW when the ACK ratio is greater than or equal to the ratio threshold.

The adjusting of the CW may comprise: reducing the CW when the ACK ratio is greater than or equal to the ratio threshold.

The adjusting of the CW may comprise: increasing the CW when the ACK ratio is less than the ratio threshold.

The CWs for all priority classes may be increased.

When the ratio threshold is not configured to the first terminal, the calculating of the ACK ratio may not be performed, and when the one or more HARQ-ACK feedbacks include at least one ACK, the CW may be changed to a minimum CW.

The ACK ratio may be a ratio between ACK(s) among the one or more HARQ-ACK feedbacks and a number of terminals expected to transmit HARQ-ACK feedbacks for the groupcast SL transmission.

The ACK ratio may be a ratio between ACK(s) among the one or more HARQ-ACK feedbacks and a number of HARQ-ACK feedbacks expected for the groupcast SL transmission.

When a negative ACK (NACK)-only transmission scheme is used, a HARQ-ACK feedback not received at the transmitting terminal among the expected HARQ-ACK feedbacks may be considered as ACK.

A method of a first terminal, according to exemplary embodiments of the present disclosure for achieving the above-described objective, may comprise: initiating a channel occupancy time (COT); performing groupcast sidelink (SL) transmission within the COT; receiving one or more hybrid automatic repeat request-acknowledgement (HARQ-ACK) feedbacks for the groupcast SL transmission; in response to a ratio threshold being configured to the first terminal, calculating a negative ACK (NACK) ratio based on the one or more HARQ-ACK feedbacks; and adjusting a content window (CW) based on a comparison result between the NACK ratio and the ratio threshold.

The one or more HARQ-ACK feedbacks considered for adjustment of the CW may be one or more HARQ-ACK feedbacks for the groupcast SL transmission performed in a reference duration within a most recent COT initiated by the first terminal among COTs.

In the adjusting of the CW, the first terminal may change the CW to a minimum CW when the NACK ratio is less than the ratio threshold, and increase the CW when the NACK ratio is equal to or greater than the ratio threshold.

The NACK ratio may be a ratio between NACK(s) among the one or more HARQ-ACK feedbacks and a number of terminals expected to transmit HARQ-ACK feedbacks for the groupcast SL transmission or a ratio between NACK(s) among the one or more HARQ-ACK feedbacks and a number of HARQ-ACK feedbacks expected for the groupcast SL transmission.

A first terminal, according to exemplary embodiments of the present disclosure for achieving the above-described objective, may comprise at least one processor, and the at least one processor may cause the first terminal to perform: initiating a channel occupancy time (COT); performing groupcast sidelink (SL) transmission within the COT; receiving one or more hybrid automatic repeat request-acknowledgement (HARQ-ACK) feedbacks for the groupcast SL transmission; in response to a ratio threshold being configured to the first terminal, calculating an ACK ratio based on the one or more HARQ-ACK feedbacks; and adjusting a content window (CW) based on a comparison result between the ACK ratio and the ratio threshold.

In the adjusting of the CW, the at least one processor may cause the first terminal to perform: changing the CW to a minimum CW when the NACK ratio is less than the ratio threshold; and increasing the CW when the NACK ratio is equal to or greater than the ratio threshold.

The ACK ratio may be a ratio between ACK(s) among the one or more HARQ-ACK feedbacks and a number of terminals expected to transmit HARQ-ACK feedbacks for the groupcast SL transmission, or a ratio between ACK(s) among the one or more HARQ-ACK feedbacks and a number of HARQ-ACK feedbacks expected for the groupcast SL transmission.

[Advantageous Effects]

According to the present disclosure, a transmitting terminal may receive HARQ-ACK feedback(s) for SL transmission, and calculate an ACK ratio or NACK ratio based on the HARQ-ACK feedback(s). The transmitting terminal may adjust a content window (CW) based on a comparison result between the ACK ratio (or NACK ratio) and a ratio threshold. Accordingly, SL communication can be performed efficiently in an unlicensed band.

[Description of Drawings]

FIG. 1 is a conceptual diagram illustrating a first exemplary embodiment of a communication network.
FIG. 2 is a block diagram illustrating a first exemplary embodiment of a communication node constituting a communication network.
FIG. 3 is a conceptual diagram illustrating a first exemplary embodiment of a system frame in a communication network.

FIG. 4 is a conceptual diagram illustrating a first exemplary embodiment of a subframe in a communication network.

FIG. 5 is a conceptual diagram illustrating a first exemplary embodiment of a slot in a communication network.

FIG. 6 is a conceptual diagram illustrating a first exemplary embodiment of time-frequency resources in a communication network.

FIG. 7 is a conceptual diagram illustrating a first exemplary embodiment of configuration of a resource pool, SL signals, and SL channels within an SL bandwidth part (BWP).

FIG. 8 is a conceptual diagram illustrating a first exemplary embodiment of SL resources.

FIG. 9 is a sequence chart illustrating a first exemplary embodiment of a CW size adjustment method.

FIG. 10 is a conceptual diagram illustrating a first exemplary embodiment of a reference duration within channel occupancy.

FIG. 11 is a conceptual diagram illustrating a second exemplary embodiment of a reference duration within channel occupancy.

[Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In exemplary embodiments of the present disclosure, "(re)transmission" may mean "transmission", "retransmission", or "transmission and retransmission", "(re)configuration" may mean "configuration", "reconfiguration", or "configuration and reconfiguration", "(re)connection" may mean "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication network to which exemplary embodiments according to the present disclosure are applied will be described. The communication network to which the exemplary embodiments according to the present disclosure are applied is not limited to the contents described below, and the exemplary embodiments according to the present disclosure may be applied to various communication networks. Here, the communication network may be used in the same sense as a communication system. A communication network may refer to a wireless communication network, and a communication system may refer to a wireless communication system.

In the present disclosure, "an operation (e.g., transmission operation) is configured" may mean that "configuration information (e.g., information element(s) or parameter(s)) for the operation and/or information indicating to perform the operation is signaled". "Information element(s) (e.g., parameter(s)) are configured" may mean that "corresponding information element(s) are signaled". In the present disclosure, signaling may be at least one of system information (SI) signaling (e.g., transmission of system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

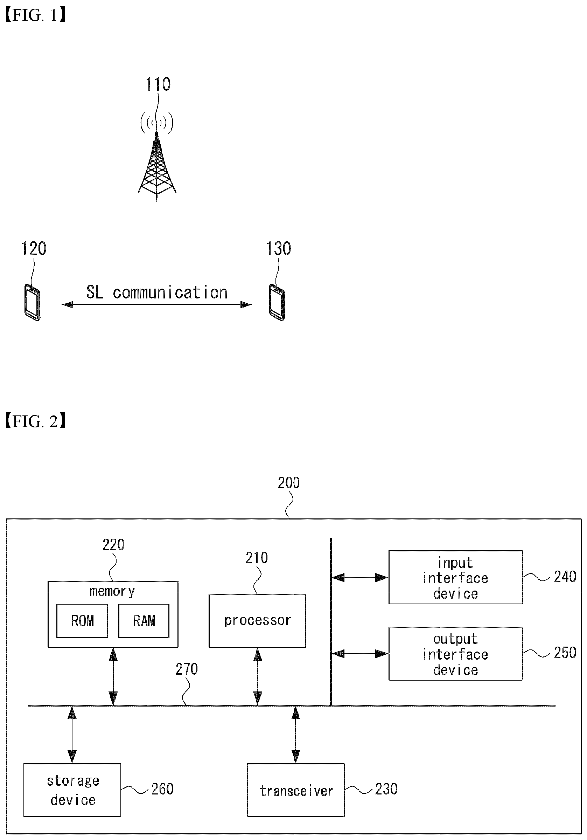

FIG. 1 is a conceptual diagram illustrating a first exemplary embodiment of a communication network.

Referring to FIG. 1, a base station 110 may support cellular communication (e.g., long term evolution (LTE), LTE-advance (LTE-A), LTE-A Pro, LTE-unlicensed (LTE-U), new radio (NR), and NR-unlicensed (NR-U) specified as the 3rd generation partnership project (3GPP) standards), or the like. The base station 110 may support multiple-input multiple-output (MIMO) (e.g., single-user MIMO (SU-MIMO), multiuser MIMO (MU-MIMO), massive MIMO, etc.), coordinated multipoint (CoMP), carrier aggregation (CA), or the like.

A first terminal 120 and a second terminal 130 may perform sidelink communication. The sidelink communication may be performed based on a mode 1 or mode 2. When the mode 1 is used, sidelink communication between the first terminal 120 and the second terminal 130 may be performed using resource(s) allocated by the base station 110. When the mode 2 is used, sidelink communication between the first terminal 120 and the second terminal 130 may be performed using resource(s) selected by the first terminal 120 or the second terminal 130.

The communication node (i.e., base station, terminal, etc.) constituting the communication network described above may support a code division multiple access (CDMA) based communication protocol, a wideband CDMA (WCDMA) based communication protocol, a time division multiple access (TDMA) based communication protocol, a frequency division multiple access (FDMA) based communication protocol, a single carrier-FDMA (SC-FDMA) based communication protocol, an orthogonal frequency division multiplexing (OFDM) based communication protocol, an orthogonal frequency division multiple access (OFDMA) based communication protocol, or the like.

Among the communication nodes, the base station may be referred to as a Node B, evolved Node B, 5G Node B (gNodeB), base transceiver station (BTS), radio base station, radio transceiver, access point, access node, transmission/reception point (Tx/Rx Point), or the like. Among the communication nodes, the terminal may be referred to as a user equipment (UE), access terminal, mobile terminal, station, subscriber station, portable subscriber station, mobile station, node, device, or the like. The communication node may have the following structure.

FIG. 2 is a block diagram illustrating a first exemplary embodiment of a communication node constituting a communication network.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Hereinafter, operation methods of a communication node in a communication network will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a first terminal (e.g., transmitting terminal) is described, a corresponding second terminal (e.g., receiving terminal) may perform an operation corresponding to the operation of the first terminal. Conversely, when an operation of the second terminal is described, the corresponding first terminal may perform an operation corresponding to the operation of the second terminal.

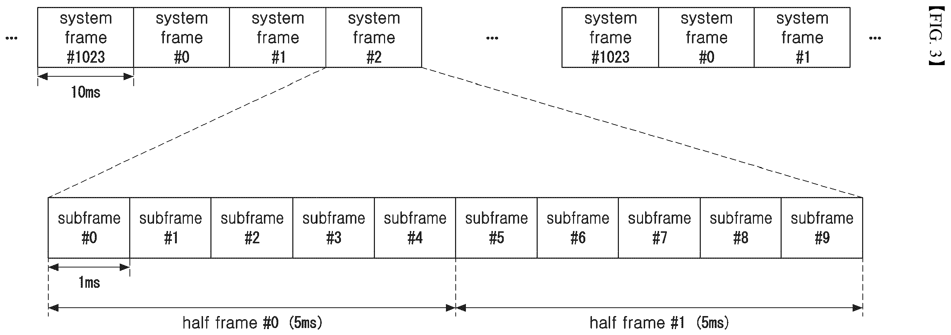

FIG. 3 is a conceptual diagram illustrating a first exemplary embodiment of a system frame in a communication network.

Referring to FIG. 3, time resources in a communication network may be divided into frames. For example, system frames each of which has a length of 10 milliseconds (ms) may be configured consecutively in the time domain of the communication network. System frame numbers (SFNs) may be set to #0 to #1023. In this case, 1024 system frames may be repeated in the time domain of the communication network. For example, an SFN of a system frame after the system frame #1023 may be set to #0.

One system frame may comprise two half frames, and the length of one half frame may be 5 ms. A half frame located in a starting region of a system frame may be referred to as a 'half frame #0', and a half frame located in an ending region of the system frame may be referred to as a 'half frame #1'. The system frame may include 10 subframes, and the length of one subframe may be 1 ms. 10 subframes within one system frame may be referred to as 'subframes # 0 to #9'.

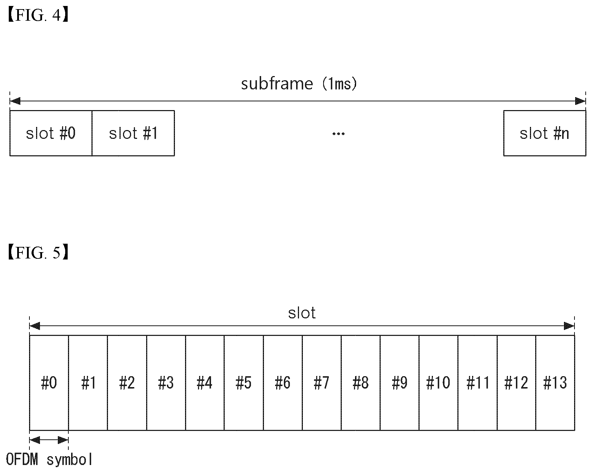

FIG. 4 is a conceptual diagram illustrating a first exemplary embodiment of a subframe in a communication network.

Referring to FIG. 4, one subframe may include n slots, and n may be a natural number. Accordingly, one subframe may be composed of one or more slots.

FIG. 5 is a conceptual diagram illustrating a first exemplary embodiment of a slot in a communication network.

Referring to FIG. 5, one slot may comprise one or more symbols. One slot shown in FIG. 5 may be composed of 14 symbols. Here, the length of the slot may vary depending on the number of symbols included in the slot and the length of the symbol. Alternatively, the length of the slot may vary according to a numerology. When a subcarrier spacing is 15 kHz (e.g., $\mu = 0$), the length of the slot may be 1 ms. In this case, one system frame may include 10 slots. When the subcarrier spacing is 30 kHz (e.g., $\mu = 1$), the length of the slot may be 0.5 ms. In this case, one system frame may include 20 slots.

When the subcarrier spacing is 60 kHz (e.g., $\mu = 2$), the length of the slot may be 0.25 ms. In this case, one system frame may include 40 slots. When the subcarrier spacing is 120 kHz (e.g., $\mu = 3$), the length of the slot may be 0.125 ms. In this case, one system frame may include 80 slots. When the subcarrier spacing is 240 kHz (e.g., $\mu = 4$), the length of the slot may be 0.0625 ms. In this case, one system frame may include 160 slots.

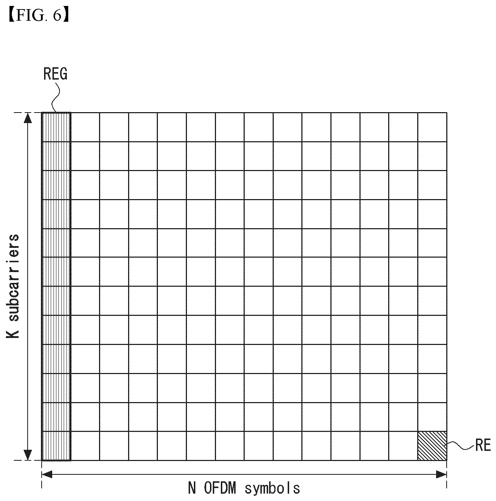

FIG. 6 is a conceptual diagram illustrating a first exemplary embodiment of time-frequency resources in a communication network.

Referring to FIG. 6, a resource configured with one OFDM symbol in the time domain and one subcarrier in the frequency domain may be defined as a 'resource element (RE)'. Resources configured with one OFDM symbol in the time domain and K subcarriers in the frequency domain may be defined as a 'resource element group (REG)'. One REG may include K REs. The REG may be used as a basic unit of resource allocation in the frequency domain. K may be a natural number. For example, K may be 12. N may be a natural number. N in the slot shown in FIG. 5 may be 14, and N in the slot shown in FIG. 6 may be 7. The N OFDM symbols may be used as a basic unit of resource allocation in the time domain.

Methods for transmitting and receiving data in a communication network will be described. In downlink communication, downlink data may be transmitted through a physical downlink shared channel (PDSCH). In uplink communication, uplink data may be transmitted through a physical uplink shared channel (PUSCH). In the present disclosure, a PDSCH may refer to downlink data or a resource in which the downlink data is transmitted and received, and a PUSCH may refer to uplink data or a resource in which the uplink data is transmitted and received. A base station may transmit downlink control information (DCI) including configuration information (e.g., resource allocation information, scheduling information) of a PDSCH on a physical downlink control channel (PDCCH). In the present disclosure, a PDCCH may refer to a DCI (e.g., control information) or a resource in which the DCI is transmitted.

A terminal may receive the DCI on the PDCCH and identify the configuration information of the PDSCH included in the DCI. For example, the configuration information of the PDSCH may include time domain resource assignment (TDRA), frequency domain resource assignment (FDRA), and/or modulation and coding scheme (MCS) information. The TDRA may indicate a resource region of the PDSCH in the time domain. The FDRA may indicate a resource region of the PDSCH in the frequency domain. The MCS information may indicate an MCS level or MCS index.

Sidelink (SL) communication methods in the communication network will be described. The SL communication may be performed in a licensed band and/or an unlicensed band. The SL communication in an unlicensed band may be referred to as sidelink-unlicensed (SL-U) communication or unlicensed-sidelink (U-SL) communication. SL resources may be used for transmission of SL signals and/or channels. The SL resources may be configured on a resource pool basis. A resource pool may be referred to as an SL resource pool. The resource pool may include a Tx resource pool and/or an Rx resource pool. The Tx resource pool may be used for SL transmission, and the Rx resource pool may be used for SL reception. The Tx resource pool and the Rx resource pool may be distinguished from each other. The Tx resource pool and the Rx resource pool may be configured independently.

In the time domain, a resource pool may include one or more slots, and in the frequency domain, a resource pool may include one or more subchannels. One subchannel may include $N_{PRB}$ physical resource blocks (PRBs). $N_{PRB}$ may be one of 10, 12, 15, 20, 25, 50, 75, or 100. The resource pool may be configured periodically. For example, the resource pool may be configured at a periodicity of 10240 milliseconds (ms) in the time domain. Some slots among all slots belonging to a period corresponding to the periodicity of 10240ms may be configured as the resource pool. Depending on a time division duplex (TDD) configuration, slot(s) including a downlink (DL) symbol may not be configured as the resource pool. Slot(s) including resources in which a sidelink-synchronization signal block (S-SSB) can be transmitted may not be configured as the resource pool. Slot(s) configurable as the resource pool may be defined by a bitmap. In other words, the bitmap may indicate slot(s) configurable as the resource pool.

An SL channel may be used for transmission and reception of traffic (e.g., data), management information, and/or control information (e.g., control information related to scheduling) related to SL services. The SL channel may include a physical sidelink broadcast channel (PSBCH), a physical sidelink shared channel (PSSCH), a physical sidelink control channel (PSCCH), and/or a physical sidelink feedback channel (PSFCH). The SL signal may include a synchronization signal (e.g., sidelink-primary synchronization signal (S-PSS), sidelink-secondary synchronization signal (S-SSS)) and/or a reference signal (e.g., demodulation reference signal (DMRS), channel state information-reference signal (CSI-RS), phase tracking (PT)-RS, and positioning reference signal (PRS)).

The PSSCH may be a channel used for transmission and reception of a transport block (TB), data, and/or traffic. The PSCCH may be a channel used for transmitting and receiving control information. The PSFCH may be a channel used for transmission and reception of a hybrid automatic repeat request (HARQ) feedback indicating a reception status of the PSSCH. The S-SSB may include at least one of the PSBCH, S-PSS, or S-SSS. The S-SSB may further include a DMRS. Synchronization between terminals may be performed using the synchronization signals (e.g., S-PSS and/or S-SSS).

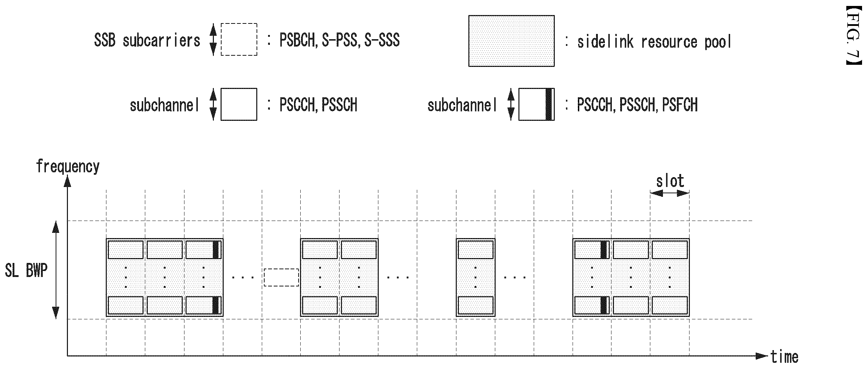

FIG. 7 is a conceptual diagram illustrating a first exemplary embodiment of configuration of a resource pool, SL signals, and SL channels within an SL bandwidth part (BWP).

Referring to FIG. 7, a resource pool may include one or more slots excluding slot(s) that do not meet configuration conditions of the resource pool and/or slot(s) not indicated by a bitmap among a plurality of slots. Non-consecutive slots in the time domain may be interpreted as consecutive within the resource pool. In other words, even when slots configured as the resource pool are not consecutive, indexes of the slots within the resource pool may be consecutive.

In the present disclosure, an SL resource (e.g., SL transmission resource) may refer to a resource within the resource pool. The SL resource may refer to a resource for transmission of an SL signal and/or SL channel. In the present disclosure, signal transmission may refer to transmission of an SL signal and/or SL channel, and signal reception may refer to reception of an SL signal and/or SL channel. 'Signal' may be interpreted as 'signal' or 'signal + channel', and 'channel' may be interpreted as 'channel' or 'channel + signal'. 'SL signal/channel' may be interpreted as 'SL signal', 'SL channel', or 'SL signal + SL channel'.

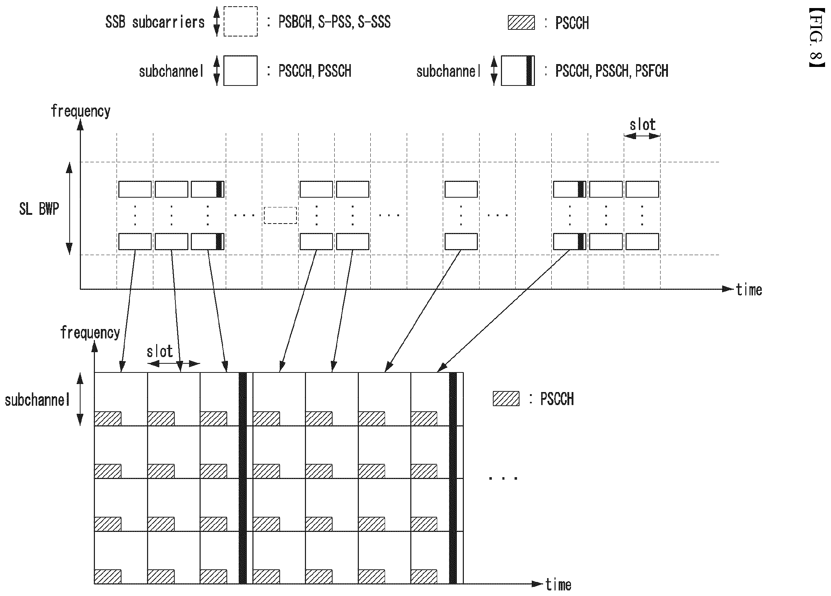

FIG. 8 is a conceptual diagram illustrating a first exemplary embodiment of SL resources.

Referring to FIG. 8, a basic transmission unit of an SL signal/channel in the time domain may be one slot, and a basic transmission unit of an SL signal/channel in the frequency domain may be one subchannel. A transmission resource of an SL signal/channel may include one or more slots and/or one or more subchannels. The transmission resource may include a PSCCH and/or a PSSCH. In addition, the transmission resource may include a PSFCH. A slot (e.g., position of the slot) including a PSFCH may be predefined. The slot including a PSFCH may be referred to as a PSFCH slot. A configuration condition of a PSFCH slot in a licensed band may be different from a configuration condition of a PSFCH slot in an unlicensed band. A transmission operation of a HARQ feedback in a PSFCH slot of a licensed band may be different from a transmission operation of a HARQ feedback in a PSFCH slot of an unlicensed band. Configuration information of an SL channel actually transmitted in a transmission resource may be transmitted through signaling (e.g., RRC message, SCI). The configuration information of the SL channel may include frequency resource information (e.g., position of a frequency resource region), time resource information (e.g., position of a time resource region), and the like.

The base station may transmit configuration information (e.g., transmission resource information) of SL channel(s) to the terminal. The terminal may receive the configuration information of SL channel(s) from the base station, and transmit SL channel(s) based on the configuration information (e.g., transmission resources indicated by the configuration information). Alternatively, the terminal may select resource(s) by performing a resource sensing operation and/or a resource selection operation, and may transmit SL channel(s) in the selected resource(s). The selected resource(s) may mean transmission resource(s). The transmission resource may include one or more subchannels and one or more slots.

The transmitting terminal may transmit an SCI including transmission resource information (e.g., scheduling information) of a PSSCH to the receiving terminal. The transmission resource information may be allocation information of subchannel(s) and/or slot(s) of the PSSCH. The transmitting terminal may refer to a terminal that transmits a PSSCH (e.g., data). The receiving terminal may refer to a terminal that receives the PSSCH (e.g., data). The transmission resource information included in the SCI may indicate a transmission resource of the PSSCH in a slot in which the SCI is transmitted. Alternatively, the transmission resource information included in the SCI may indicate a transmission resource of the PSSCH in a slot other than the slot in which the SCI is transmitted.

In SL-U communication, a listen-before-talk (LBT) operation may be performed for coexistence with other communication nodes (e.g., communication devices). Actual transmission resources may be determined based on a result of the LBT operation. The terminal may perform an LBT operation, and when the LBT operation succeeds, the terminal may use a channel for a specific time (e.g., channel occupancy time (COT)). For example, when the LBT operation of the terminal succeeds, a COT may be initiated by the terminal, and the terminal may perform communication (e.g., SL-U communication) during the COT. Depending on a specific condition, other terminals (e.g., terminals that have not initiated the COT) may perform communication (e.g., SL-U communication) during the COT. In other words, the COT may be shared with other terminal(s), and in this case, the other terminal(s) may perform communication within the shared COT.

A transmission unit (e.g., symbol configuration) within the COT may vary. Configuration information of a transmission unit within the COT may be transmitted through signaling (e.g., SCI). The symbol may refer to an OFDM symbol. In the exemplary embodiment of FIG. 8, a PSCCH and a PSSCH may be configured together within a transmission resource. The PSCCH may be configured starting from a PRB with the lowest index in a subchannel with the lowest index among subchannel(s) configured for PSSCH transmission.

Operations, procedures, control information, and/or configuration information for operating channel occupancy in SL-U communication will be described. An operating channel may refer to a frequency resource having a bandwidth of a predefined size. Resources (e.g., time resources, frequency resources, carriers, subcarriers, subchannels) of an unlicensed band may be occupied by a communication node belonging to a network (e.g., wireless local area network (WLAN)) other than a cellular network (e.g., 4G network, 5G network). Resources in an unlicensed band may be occupied by signals/channels transmitted and received between the base station and the terminal belonging to the cellular network. Resources in an unlicensed band may be occupied by signals/channels transmitted and received between terminals belonging to the cellular network.

In the present disclosure, a communication node (e.g., base station, terminal) transmitting a signal/channel may be expressed as a transmitting node, and a communication node (e.g., base station, terminal) receiving a signal/channel may be expressed as a receiving node. In an unlicensed band, communication nodes may share an operating channel. The LBT operation may be performed to minimize interference between communication nodes. The LBT operation may include an operation of identifying whether an operating channel is occupied by another signal before transmitting a signal/channel. When the LBT operation is supported, a communication node (e.g., transmitting node) may perform a random backoff procedure.

When the LBT operation succeeds, the communication node may occupy the operating channel. The occupancy of the operating channel may be referred to as channel occupancy (CO). The terminal may secure a CO by performing an LBT operation. Configuration of the CO may vary depending on a type of LBT operation performed by the terminal. For example, the maximum length of CO may vary depending on the type of LBT operation performed by the terminal. The type of LBT operation performed by the terminal may vary depending on a priority class of data to be transmitted by the terminal within the CO.

The terminal may perform the LBT operation using different parameters (e.g., different LBT parameters) to obtain a CO corresponding to each priority class. When the LBT operation is performed according to the priority class, the parameters that determine an execution time of the LBT operation may vary. In the LBT operation involving a random backoff procedure, the minimum and/or maximum size of a contention window (CW) may be set differently for each priority class. The terminal may select a random backoff counter within the CW and perform a random backoff procedure based on the selected random backoff counter.

A fixed time period in which the LBT operation is performed may be determined based on the type of LBT operation and/or LBT parameter(s). The length of the fixed time period may be 16 $\mu$s or 25 $\mu$s. The communication node (e.g., transmitting node) that performed the LBT operation may transmit information on a CO (e.g., CO configuration information) obtained by the LBT operation to another communication node (e.g., receiving node). The CO configuration information may include LBT parameter(s) used for the LBT operation of the terminal. The LBT parameter(s) may include information of the priority class. The CO configuration information may include at least one of information of a start time of the CO, information of the length of the CO, or information of an end time of the CO. In the present disclosure, 'time point' may be interpreted as 'time'.

The receiving node may receive the CO configuration information from the transmitting node, and identify the LBT parameter(s) used for obtaining the CO based on the CO configuration information. The receiving node may identify the priority class for the CO initiated by the transmitting node based on the LBT parameter(s). The receiving node may identify the CO initiated by the transmitting node based on the CO configuration information, and perform communication within the CO. For example, the receiving node may transmit and receive signals/channels within the CO.

The transmitting node may configure a channel occupancy time (COT). The configuration of the COT mean initiation of the COT. The COT may be configured within a time resource and/or a frequency resource. Configuration information of the COT (i.e., COT configuration information) may indicate a time resource and/or a frequency resource in which the COT is configured. The COT may be referred to as a CO or channel occupancy resource (COR) In an unlicensed band, resources may be shared by multiple communication nodes. A communication node may use non-consecutive resources (e.g., non-consecutive time resources and/or non-consecutive frequency resources). In this case, signal/-channel transmission in an unlicensed band may be performed in a discontinuous burst scheme. The burst scheme may refer to transmission performed in a transmission resource including one or more slots.

A signal/channel may be transmitted in a time with a length shorter than a slot. The time with a length shorter than a slot may include consecutive symbols. The time with a length shorter than a slot may be a mini-slot. Consecutive transmission resources may be configured within a COT. The transmitting node may transmit an initial signal and/or a burst signal (e.g., PSSCH, PSFCH, PSCCH, reference signal) within the COT. The initial signal may be a signal obtained by duplicating a signal of the first symbol in which SL transmission is performed. Alternatively, the initial signal may be a signal composed of a cyclic prefix (CP).

SL resources may be allocated based on a mode 1 or mode 2. The mode 1 may be referred to as a resource allocation (RA)-mode 1, and the mode 2 may be referred to as an RA-mode 2. When the RA-mode 1 is used, a base station may transmit a DCI (e.g., SL grant) including SL resource allocation information to a terminal, and the terminal may perform SL communication using the SL resources allocated by the base station. When the RA-mode 2 is used, the terminal may perform a resource sensing operation within the resource pool, perform a resource selection operation for resources sensed by the resource sensing operation, and perform SL communication using resources selected by the resource selection operation.

In the RA-mode 1, when transmission data occurs, the terminal may transmit a scheduling request (SR) for the transmission data to the base station, and the base station may allocation resources (e.g., SL resources) to the terminal based on the SR by using a dynamic grant (DG). In the RA-mode 1, the base station may allocate periodic resources to the terminal in a semi-static scheme, and the terminal may perform SL communication using the periodic resources allocated by the base station.

The periodic resources allocated in the semi-static scheme may be configured grant (CG) resources. The base station may transmit allocation information of CG resources to the terminal. The allocation information of the CG resources may include at least one of position information of the CG resources, time resource information of the CG resources, frequency resource information of the CG resources, or periodicity information of the CG resources. According to a release procedure or deactivation procedure of CG resources, a CG scheme may be classified into CG-Type 1 and CG-Type 2. In the CG-Type 1, CG resources may be released by RRC signaling. In the CG-Type 2, CG resources may be deactivated by DCI signaling.

In the RA-mode 2, the terminal may perform a resource sensing operation during a sensing window, select resource(s) that satisfy predefined conditions among resources sensed by the resource sensing operation, and transmit an SL signal/channel using the selected resource(s). The resource sensing/selection methods according to the RA-mode 2 may be classified into a dynamic scheme and a semi-static scheme. According to the semi-static scheme, specific time resources may be occupied. The dynamic scheme and the semi-static scheme may be distinguished depending on a time of selecting new resources. When the dynamic scheme is used, the terminal may select resources for TB transmission every time it wants to transmit a new TB. The TB transmission may include 'new TB transmission (e.g., initial TB transmission)' and/or 'TB retransmission'. One or more resources (e.g., one or more transmission resources) may be used, occupied, and/or reserved for TB transmission.

When the semi-static scheme is used, a counter value of TB transmission may be 0 during a specific time (e.g., resource reservation interval (RRI)). Alternatively, when the semi-static scheme is used, a new transmission resource may be selected under a specific condition. The counter value of TB transmission may be selected randomly. The selected counter value may be decreased by 1 when one TB transmission (e.g., new TB transmission and/or TB retransmission) is completed. When the semi-static scheme is used, the terminal may continue to occupy the selected resource during a specific time. In other words, the terminal may continue to use the selected resource during the specific time. The specific time may mean a time that the terminal can exclusively occupy. The specific time may be defined as RRI.

The base station may signal an RRI list to the terminal. The RRI list may include up to 16 RRIs (e.g., up to 16 RRI values). The signaling may be at least one of system information (SI) signaling, RRC signaling, MAC CE signaling, or PHY signaling. The terminal may receive the RRI list from the base station, select one RRI among RRIs belonging to the RRI list, and use a selected resource (e.g., selected transmission resource) during the selected RRI. The terminal may occupy consecutive resources during the RRI. The consecutive resources may be configured in a logical resource region for SL.

A first terminal may transmit an SCI including information of the selected RRI to a second terminal. The second terminal may receive the SCI from the first terminal and identify the RRI selected by the first terminal based on an information element included in the SCI. The second terminal may not select a resource (e.g., resource selected by the first terminal) during the RRI indicated by the SCI. The information on the resource selected by the first terminal may be included in the SCI.

When the RA-mode 2 is used, a resource sensing window and/or a resource selection window may be configured. The resource sensing window may be referred to as a sensing window (SSW), and a resource sensing operation may be performed within the SSW. The resource selection window may be referred to as a selection window (SLW), and a resource selection operation may be performed within the SLW. Resources used during the RRI (e.g., RRI value) indicated by the SCI may be identified by the resource sensing operation performed in the SSW.

The sidelink control information (SCI) may include scheduling information (e.g., scheduling information of a TB) and/or parameter(s) applicable to TB transmission. The parameter(s) applied to TB transmission may be used for demodulation/decoding of the TB at a receiving terminal. The SCI may be classified into a first-stage SCI (1st SCI) and a second-state SCI (2nd SCI). The first-stage SCI may be transmitted on a PSCCH, and the second-stage SCI may be transmitted on a PSSCH. The second-stage SCI may be associated with the first-stage SCI. The first-stage SCI may include scheduling information for initial TB transmission and/or scheduling information for TB retransmission. The second-stage SCI may include at least one of information on a PSSCH transmitting terminal, information on a PSSCH receiving terminal, HARQ feedback information, or retransmission information.

Y transmission resources including a slot in which the first-stage SCI is transmitted may be configured. Y may be a natural number. For example, Y may be 2 or 3. The first transmission resource among the Y transmission resources may be configured in the slot in which the first-stage SCI is transmitted. In other words, the first transmission resource among the Y transmission resources may be the slot in which the first-stage SCI is transmitted. The slot(s) in which (Y-1) transmission resources are configured may be defined by slot offset(s). The slot offset may be a positive integer. The maximum value of the slot offset may be 32.

The scheduled first transmission resource may include $N_{subchannel}$ subchannels in the frequency domain. The first subchannel (e.g., start subchannel) among $N_{subchannel}$ subchannels may be a subchannel through which the first-stage SCI is transmitted. $N_{subchannel}$ may be a natural number. $N_{subchannel}$ may be set to be equal to or less than the maximum number of subchannels configured by higher layer signaling. The first-stage SCI may include frequency resource information of the second transmission resource (e.g., information of N subchannel(s), information of a start subchannel among the N subchannel(s)) and/or frequency resource information of the third transmission resource (e.g., information of N subchannel(s), information on a start subchannel among the N subchannel(s)). The number N of subchannels of the second transmission resource may be the same as the number $N_{subchannel}$ of subchannels of the first transmission resource. The number N of subchannels of the third transmission resource may be the same as the number $N_{subchannel}$ of subchannels of the first transmission resource. The first transmission resource among the Y transmission resources may be a transmission resource for the first TB transmission (e.g., initial TB transmission). The remaining (Y-1) transmission resource(s) may be transmission resource(s) for TB retransmission.

The first-stage SCI may include one or more information elements defined in Table 1 below.

[Table 1]

| Information elements |
|---|
| Priority: Priority of data or information transmitted on a PSSCH |
| Frequency resource assignment: information on subchannels of one or two additional transmission resources |
| Time resource assignment: information on slot offset(s) of one or two additional transmission resources other than the first-stage SCI |
| Resource reservation period: time period in which the same resource is used |
| PSFCH overhead indicator: information indicating whether to transmit a PSFCH. A receiving terminal may perform an operation of determining a TB size (TBS) and/or an operation of identifying resource elements (REs) used for PSSCH transmission based on the PSFCH overhead indicator. |
| Second-stage SCI format: SCI format 2-A, SCI format 2-B, SCI format 2-C |
| DMRS pattern |
| Beta offset indicator |
| DMRS port number |
| MCS |
| Additional MCS table indicator |
| Collision information receiver flag |
| Other information element(s) |

The second-stage 2 SCI may include one or more information elements. The information elements included in the second-stage SCI may vary depending on a format of the second-stage SCI. The second-stage SCI may include one or more information elements defined in Table 2 below.

[Table 2]

| Information elements |
|---|
| HARQ process number |
| New data indicator (NDI) |

(continued)

| Information elements |
|---|
| Redundancy version (RV) |
| Source ID |
| Destination ID |
| HARQ feedback enable/disable indicator |
| Cast type indicator |
| Other information element(s) |

A PSFCH may be configured periodically within an SL resource region. A slot in which a PSFCH is configured may be referred to as a PSFCH slot. The PSFCH slot may be configured according to a periodicity. The periodicity of the PSFCH slot may be referred to as a PSFCH transmission occasion resource (TPR). The PSFCH TPR may be defined on a slot basis within a resource pool. The PSFCH TPR may be 1 slot, 2 slots, or 4 slots. PRB(s) in which the PSFCH can be transmitted in the frequency domain may be indicated by a bitmap. The PRBs available for PSFCH transmission may be all PRBs or some PRBs. One PSFCH may be transmitted in one PRB. Alternatively, in an unlicensed band, one PSFCH may be transmitted in one or more PRBs.

The PRB(s) in which the PSFCH is transmitted may be determined based on a location of a slot in which a PSSCH associated with the PSFCH is received. A difference (e.g., slot offset, interval) between the slot in which the PSSCH is received and the slot in which the PSFCH is to be transmitted may be considered. For example, the PSFCH may be transmitted in a PSFCH slot occurring first after K slot(s) from a slot n in which the PSSCH is received. A PRB index (e.g., index of the PRB in which the PSFCH is transmitted) may be defined based on a function $f(P_{PSFCH}, n, K, k_{subch})$. The $P_{PSFCH}$ may be a periodicity of the PSFCH. n may be the index of the slot in which the PSSCH is received. K may be a slot offset used to determine the PSFCH slot in which the PSFCH is transmitted. $k_{subch}$ may be the index of the subchannel in which the PSCCH is configured.

In the function f(.) for determining the PRB index, at least one of a different code q, an identifier (ID) of the transmitting terminal, or an ID of the receiving terminal transmitting the PSFCH may be considered. The code q may be defined by a cyclic shift or a cyclic shift pair. The cyclic shifts may be related to different Zadoff-Chu sequences. The cyclic shift pair may refer to a pair of different sequences according to acknowledgment (ACK) or negative ACK (NACK).

A set of PRBs in which the PSFCH is transmitted may be determined based on a slot #n in which the PSSCH is transmitted and/or an index of a subchannel in which the PSSCH is transmitted. A code conveyed by the PSFCH and a PRB in the PRB set may be determined based on a function that considers at least one of the ID of the transmitting terminal or the ID of the receiving terminal transmitting the PSFCH.

A first terminal may transmit a signal/channel to a second terminal using an SL transmission method. The second terminal may receive the signal/channel from the first terminal using an SL reception method. The first terminal may transmit a TB on a PSSCH. The first terminal may transmit control information on the PSCCH. The control information may include information element(s) required for demodulation and/or decoding of the TB transmitted on the PSSCH. The first terminal may transmit control information on a PSCCH. The second terminal may receive the control information from the first terminal, and identify resource usage information based on the control information. The second terminal may receive the PSSCH (e.g., TB) and transmit a HARQ-ACK feedback (e.g., HARQ feedback, HARQ response) for the PSSCH to the first terminal. The HARQ-ACK feedback for the PSSCH may be transmitted on a PSFCH.

In the present disclosure, a terminal performing PSCCH transmission, PSSCH transmission, and/or PSFCH reception may be referred to as a transmitting terminal or a first terminal, and a terminal performing PSCCH reception, PSSCH reception, and/or PSFCH transmission may be referred to as a receiving terminal or a second terminal.

In SL-U communication, the terminal may perform an LBT operation before transmitting a signal/channel. If a result of the LBT operation indicates an idle state, the terminal may transmit a signal/channel. If the result of the LBT operation indicates a busy state, the terminal may not transmit a signal/channel. "The result of the LBT operation indicates the idle state" may mean "the LBT operation succeeds". "The result of the LBT operation indicates the busy state" may mean "the LBT operation fails". Based on a result of comparison between an energy detection level and a predefined threshold, the result of the LBT operation may be determined as indicating the idle state or busy state.

The LBT operation may be classified into a type 1 LBT operation and a type 2 LBT operation. In the type 1 LBT operation, a channel sensing time may be variable. The channel sensing time may be changed by a random variable. The type 1 LBT operation may refer to an LBT operation involving a random backoff procedure. In the type 2 LBT operation, a channel sensing time may be fixed. The channel sensing time may be m μs. m may be a natural number.

When the type 1 LBT operation is performed, the terminal may randomly select a value N according to a uniform probability within the CW. The value N may be an integer. The value N may be a random backoff counter. The terminal may perform a channel sensing operation in a predefined sensing period (e.g., sensing slot period). The channel sensing operation may mean an energy detection operation for time and/or frequency resource(s). If a result of the channel sensing operation in one sensing period indicates an idle state, the terminal may decrease the value N selected within the CW by 1. If the result of the channel sensing operation in one sensing period indicates a busy state, the terminal may additionally perform the channel sensing operation. If the result of the channel sensing operation in N sensing periods indicates an idle state, the terminal may transmit a signal/channel.

In the Type 1 LBT operation, a CW (e.g., CW size) may be changed. The CW of the transmitting terminal may be changed based on a reception state (e.g., ACK and/or NACK) of a signal/channel transmitted by the transmitting terminal. The receiving terminal may transmit a HARQ-ACK feedback for the signal/channel of the transmitting terminal to the transmitting terminal. The transmitting terminal may identify the reception state at the receiving terminal based on the HARQ-ACK feedback received from the receiving terminal. When the HARQ-ACK feedback received from the receiving terminal indicates ACK, the transmitting terminal may reduce the CW (e.g., CW size). When the HARQ-ACK feedback received from the receiving terminal indicates NACK, the transmitting terminal may increase the CW.

The CW (e.g., CW size) may be individually managed according to a channel access priority class (CAPC). The CAPC may be associated with a quality of service (QoS) of a data that the terminal desires to transmit. Different CWs may be applied for the respective CAPCs.

The transmitting terminal may transmit data for a CAPC #N, and a CW (e.g., CW size) may be adjusted based on a HARQ-ACK feedback for the data. In this case, only the CW for the CAPC #N may be changed, and CWs for other CAPCs may not be changed. In other words, CWs for other CAPCs may remain the same. The change of the CW may mean a change in the CW size.

Alternatively, the transmitting terminal may transmit data for the CAPC #N, and the CW (e.g., CW size) may be adjusted based on a HARQ-ACK feedback for the data. In this case, CWs for all CAPCs may be changed. When it is determined to increase the CW for the CAPC #N based on the HARQ-ACK feedback for the data, the transmitting terminal may increase CWs for all CAPCs. When it is determined to reduce or initialize the CW for the CAPC #N based on the HARQ-ACK feedback for the data, the transmitting terminal may decrease or initialize CWs for all CAPCs.

An initial value of the CW (e.g., initial CW) may be predefined. A minimum value of the CW (e.g., minimum CW) and/or a maximum value of the CW (e.g., maximum CW) may be predefined. The initial CW may be equal to the minimum CW. The initial CW may be referred to as $CW_{initial}$. The minimum CW may be referred to as $CW_{min}$. The maximum CW may be referred to as $CW_{max}$. $CW_{initial}$, $CW_{min}$, and $CW_{max}$ may each be set differently for each CAPC. When $CW_{max}$ is used in a terminal and an increase in $CW_{max}$ is required based on HARQ-ACK feedback(s) for data, the terminal may maintain $CW_{max}$. In other words, the terminal may not increase $CW_{max}$.

$CW_{initial}$ may be defined differently for each CAPC. Based on HARQ-ACK feedback(s) for a signal/channel (e.g., data), the CW may be set to $CW_{initial}$. Based on HARQ-ACK feedback(s) for a signal/channel (e.g., data), the CW may be increased by a factor of 2. In other words, the CW may be doubled. Based on HARQ-ACK feedback(s) for a signal/channel (e.g., data), the CW may remain the same. The terminal may use the changed CW or maintained CW in an LBT operation for the next transmission.

The transmitting terminal may transmit a PSSCH to the receiving terminal based on a unicast scheme. When the unicast scheme is used, one transmitting terminal may transmit a signal/channel to one receiving terminal. The receiving terminal may receive the PSSCH from the transmitting terminal. In other words, the receiving terminal may receive a TB of the transmitting terminal on the PSSCH.

The transmitting terminal may transmit a first-stage SCI including information element(s) required for demodulating/decoding the TB and/or second-stage SCI. The receiving terminal may receive the first-stage SCI from the transmitting terminal and identify the information element(s) included in the first-stage SCI. In other words, the receiving terminal may identify the information element(s) required for demodulating/decoding the TB and/or second-stage SCI by receiving the first-stage SCI of the transmitting terminal.

The receiving terminal may receive the PSSCH from the transmitting terminal and transmit a reception result (e.g., HARQ-ACK feedback) of the PSSCH to the transmitting terminal on a PSFCH. When it is indicated not to transmit a HARQ-ACK feedback (e.g., when a HARQ feedback disable indicator is received), the receiving terminal may not transmit a HARQ-ACK feedback for the PSSCH to the transmitting terminal.

The receiving terminal may transmit the HARQ-ACK feedback to the transmitting terminal using a PSFCH. When the PSSCH is successfully received (e.g., when a demodulation/decoding operation for the PSSCH is completed normally), the receiving terminal may transmit a HARQ-ACK feedback indicating ACK. When the reception of the PSSCH fails (e.g., when a demodulation/decoding operation for the PSSCH fails), the receiving terminal may transmit a HARQ-ACK feedback indicating NACK. Whether the reception of the PSSCH is successful may be determined depending on whether a cyclic redundancy check (CRC) code is normally decoded.

When the first-stage SCI is received from the transmitting terminal and the second-stage SCI is not received from the transmitting terminal, the receiving terminal may transmit a HARQ-ACK feedback indicating NACK to the transmitting terminal. When the transmitting terminal transmits a PSSCH to the receiving terminal, but does not receive a HARQ-ACK feedback for the PSSCH from the receiving terminal, the transmitting terminal may consider that the receiving terminal has transmitted NACK.

When ACK is received from the receiving terminal, the transmitting terminal may change the CW to $CW_{initial}$ or $CW_{min}$. When NACK is received from the receiving terminal, the transmitting terminal may increase the CW. When ACK is not received from the receiving terminal, the transmitting terminal may increase the CW. In case(s) other than when ACK is received from the receiving terminal, the transmitting terminal may increase the CW. When NACK is regarded as having been received from the receiving terminal, the transmitting terminal may increase the CW. When the transmitting terminal indicates the receiving terminal not to transmit a HARQ-ACK feedback (e.g., when the transmitting terminal transmits an SCI including a HARQ feedback disable indicator to the receiving terminal), the transmitting terminal may maintain the CW regardless of a reception state of the PSSCH at the receiving terminal. In other words, when the HARQ feedback is disabled, the transmitting terminal may not change the CW regardless of the reception state of the PSSCH at the receiving terminal.

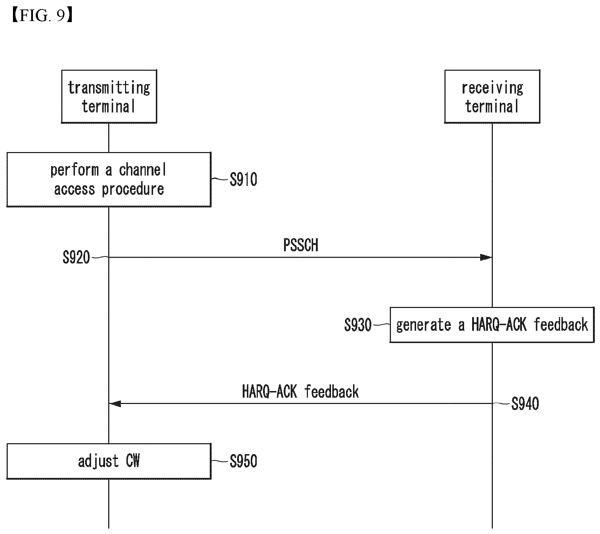

FIG. 9 is a sequence chart illustrating a first exemplary embodiment of a CW size adjustment method.

Referring to FIG. 9, a transmitting terminal may perform a channel access procedure for PSSCH transmission (e.g., data transmission, unicast SL transmission, groupcast SL transmission) (S910). The channel access procedure may include an LBT operation. When the channel access procedure succeeds, the transmitting terminal may transmit a PSSCH to a receiving terminal (S920). The receiving terminal may receive the PSSCH from the transmitting terminal and perform a demodulation/decoding operation on the PSSCH. The receiving terminal may generate a HARQ-ACK feedback based on a result of the demodulation/decoding operation on the PSSCH (S930). The HARQ-ACK feedback may indicate ACK or NACK. The receiving terminal may transmit the HARQ-ACK feedback to the transmitting terminal (S940). The HARQ-ACK feedback may be transmitted on a PSFCH. The transmitting terminal may receive the HARQ-ACK feedback from the receiving terminal. The transmitting terminal may adjust a CW (e.g., CW size) based on the HARQ-ACK feedback (S950). For example, the transmitting terminal may increase or reduce the CW. Alternatively, the transmitting terminal may maintain the CW.

The transmitting terminal may transmit a PSSCH to one or more receiving terminals (e.g., receiving terminal(s) belonging to a group) based on a groupcast scheme. The transmitting terminal may transmit the PSSCH in a groupcast scheme within a COT initiated or configured by the transmitting terminal. PSSCH transmission(s) based on a groupcast scheme may be groupcast SL transmission(s). The groupcast SL transmission(s) may be transmitted in a reference duration within the COT (e.g., the latest COT) initiated by the transmitting terminal. The transmitting terminal may receive HARQ-ACK feedback(s) from one or more receiving terminals on PSFCH(s). The transmitting terminal may receive HARQ-ACK feedback(s) for PSSCH(s) transmitted in the same slot from one or more receiving terminals.

The transmitting terminal may adjust the CW based on the HARQ-ACK feedback(s) for the groupcast SL transmission(s). When one or more HARQ-ACK feedbacks among the HARQ-ACK feedbacks indicate ACK, the transmitting terminal may change the CW (e.g., current CW) to an initial CW (e.g., $CW_{initial}$) or minimum CW (e.g., $CW_{min}$). When at least one HARQ-ACK feedback among the HARQ-ACK feedbacks does not indicate ACK, the transmitting terminal may increase the CW.

Alternatively, the transmitting terminal may adjust the CW based on an ACK ratio and/or NACK ratio.

$$[\text{Equation } 1]$$

$$ACK \ ratio = \frac{A}{F}$$

A may indicate the number of ACKs received by the transmitting terminal or (the number of ACKs received by the transmitting terminal + the number of HARQ-ACK feedback(s) considered as ACK among HARQ-ACK feedback(s) not received by the transmitting terminal). When a NACK-only feedback scheme is used, A may indicate the number of HARQ-ACK feedbacks not received by the transmitting terminal. In this case, the transmitting terminal may consider the unreceived HARQ-ACK feedback(s) as ACK. F may indicate the total number of HARQ-ACK feedbacks received by the transmitting terminal, estimated number of HARQ-ACK feedbacks for the groupcast SL transmission, number of receiving terminals participating in the groupcast SL communication, (number of terminals participating in the groupcast SL communication - 1), number of receiving terminals expected to transmit HARQ-ACK feedback(s), or number of HARQ-ACK(s) expected to be received from receiving terminals participating in the groupcast SL communication.

[Equation 2]

$$NACK\ ratio\ =\ \frac{N}{F}$$

*N* may indicate the number of NACKs received by the transmitting terminal or (number of NACKs received by the transmitting terminal + number of HARQ-ACK feedback(s) considered as NACK among HARQ-ACK feedback(s) not received by the transmitting terminal. *F* may indicate the total number of HARQ-ACK feedbacks received by the transmitting terminal, estimated number of HARQ-ACK feedbacks for the groupcast SL transmission, number of receiving terminals participating in the groupcast SL communication, (number of terminals participating in the groupcast SL communication - 1), number of receiving terminals expected to transmit HARQ-ACK feedback(s), or number of HARQ-ACK(s) expected to be received from receiving terminals participating in the groupcast SL communication.

The transmitting terminal may calculate the ACK ratio based on Equation 1. If the ACK ratio is greater than or equal to a ratio threshold, the transmitting terminal may change the CW (e.g., current CW) to the initial CW (e.g., $CW_{initial}$) or the minimum CW (e.g., $CW_{min}$). Alternatively, if the ACK ratio is equal to or greater than the ratio threshold, the transmitting terminal may reduce the CW. If the ACK ration is less than the ratio threshold, the transmitting terminal may increase the CW. The ratio threshold may be referred to by other terms (e.g., specific threshold, first threshold).

The transmitting terminal may calculate the NACK ration based on Equation 2. If the NACK ratio is less than the ratio threshold, the transmitting terminal may change the CW to the initial CW (e.g., $CW_{initial}$) or the minimum CW (e.g., $CW_{min}$). Alternatively, if the NACK ratio is less than the ratio threshold, the transmitting terminal may reduce the CW. If the NACK ratio is equal to or greater the ratio threshold, the transmitting terminal may increase the CW.

The ratio threshold may be configured to terminal(s) through signaling. For example, the base station may transmit an RRC message including the ratio threshold to the terminal(s). When the ratio threshold is configured to the terminal(s), the transmitting terminal may adjust the CW based on a comparison result between the ACK ratio and the ratio threshold or a comparison result between the NACK ratio and the ratio threshold. When the ratio threshold is not configured to the terminal(s), the transmitting terminal may not consider the ACK ratio and/or NACK ratio for CW adjustment. In this case, when at least one ACK is received, the transmitting terminal may change the CW to the initial CW or minimum CW. Alternatively, when at least one ACK is received, the transmitting terminal may reduce the CW. When at least one ACK is not received, the transmitting terminal may increase the CW.

The transmitting terminal may receive HARQ-ACK feedback(s) for PSSCH(s) (e.g., groupcast SL transmission(s)) from one or more receiving terminal(s) on PSFCH(s) within the same slot. The transmitting terminal may adjust the CW based on HARQ-ACK feedback(s) for groupcast SL transmission(s) in a reference duration within a COT most recently initiated by the transmitting terminal. Alternatively, the transmitting terminal may adjust the CW based on HARQ-ACK feedback(s) for a most recently transmitted PSSCH (e.g., most recent groupcast SL transmission).

When a HARQ-ACK feedback #N for a PSSCH transmitted in a slot #N and a HARQ-ACK feedback #N+M for a PSSCH transmitted in a slot #N+M are received on PSFCH(s) within the same slot, the transmitting terminal adjust the CW using the HARQ-ACK feedback #N+M among the HARQ-ACK feedbacks. Each of N and M may be a natural number. For selection of the HARQ-ACK feedback used for CW adjustment, a CAPC of the PSSCH transmitted in the slot #N and a CAPC of the PSSCH transmitted in the slot #N+M may not be considered. In other words, the CW adjustment may be performed regardless of the CAPC of the PSSCH transmitted in the slot #N and the CAPC of the PSSCH transmitted in the slot #N+M.

The CW adjustment operation may be performed when the CAPC of the PSSCH transmitted in the slot #N is the same as the CAPC of the PSSCH transmitted in the slot #N+M. If the CAPC of the PSSCH transmitted in the slot #N is different from the CAPC of the PSSCH transmitted in the slot #N+M, CW adjustment for each CAPC may be performed based on a HARQ-ACK feedback for a PSSCH corresponding to each CAPC.

The transmitting terminal may receive one or more HARQ-ACK feedbacks for one or more PSSCHs from one or more receiving terminals on PSFCH(s) within the same slot. The one or more PSSCHs associated with the one or more HARQ-ACK feedbacks received on the PSFCH(s) within the same slot may be continuous or discontinuous in the time domain. The transmitting terminal may individually change the CWs based on the one or more HARQ-ACK feedbacks for one or more discontinuous PSSCHs in the time domain. The transmitting terminal may receive a HARQ-ACK feedback #N for a PSSCH #N transmitted in a slot #N and a HARQ-ACK feedback #N+M for a PSSCH #N+M transmitted in a slot #N+M on PSFCH(s) within the same slot. In this case, the transmitting terminal may change the CW using the HARQ-ACK feedback #N. Additionally, the transmitting terminal may change the CW changed based on the HARQ-ACK feedback #N by using the HARQ-ACK feedback #N+M. Each of N and M may be a natural number.

The transmitting terminal may perform PSSCH transmissions in consecutive slots in the time domain. The transmitting terminal may receive HARQ-ACK feedback(s) for the PSSCHs transmitted in consecutive slots in the time domain on PSFCH(s) within the same slot. The transmitting terminal may change the CW using a HARQ-ACK feedback for a PSSCH transmitted first among the PSSCHs transmitted in consecutive slots in the time domain. For example, when PSSCH transmissions are performed in a slot #N, slot #N+1, ..., and slot #N+M, and HARQ-ACK feedback(s) for the PSSCH transmissions are received on PSFCH(s) (e.g., PSFCH(s) within the same slot), the transmitting terminal may change the CW using the HARQ-ACK feedback for the PSSCH transmitted in the slot #N.

The transmitting terminal may calculate an ACK ratio and/or NACK ratio based on the one or more HARQ-ACK feedbacks, and may adjust the CW based on the ACK ratio and/or NACK ratio. The transmitting terminal may receive HARQ-ACK feedback(s) for the one or more PSSCH transmissions on PSFCH(s) within the slot #N. The one or more PSSCH transmissions may be transmitted in the most recent COT initiated by the transmitting terminal (e.g., reference duration within the most recent COT). The transmitting terminal may calculate the ACK ratio based on Equation 1 described above. The transmitting terminal may calculate the NACK ratio based on Equation 2 described above.

When the ACK ratio is equal to or greater than the ratio threshold, the transmitting terminal may change the CW to the initial CW or initial CW. Alternatively, when the ACK ratio is equal to or greater than the ratio threshold, the transmitting terminal may reduce the CW. When the ACK ratio is less than the ratio threshold, the transmitting terminal may increase the CW. When the NACK ratio is equal to or greater than the ratio threshold, the transmitting terminal may increase the CW. When the NACK ratio is less than the ratio threshold, the transmitting terminal may change the CW to the initial CW or initial CW. Alternatively, when the NACK ratio is less than the ratio threshold, the transmitting terminal may reduce the CW.

When the CW is adjusted based on the HARQ-ACK feedback(s) received on the PSFCH(s), the transmitting terminal may perform a next LBT operation (e.g., type 1 LBT operation) using the adjusted CW.

When the receiving terminal's HARQ-ACK feedback is received on a PSFCH, the transmitting terminal may adjust the CW based on the HARQ-ACK feedback after a predefined time from a reception time of the HARQ-ACK feedback, a transmission time of a PSSCH associated with the HARQ-ACK feedback, or a transmission time of a PSCCH associated with the PSSCH, and may perform a next LBT operation using the adjusted CW. Alternatively, when the CW is adjusted based on the HARQ-ACK feedback received on a PSFCH, the transmitting terminal may perform a next LBT operation using the adjusted CW after a predefined time from a reception time of the HARQ-ACK feedback, a transmission time of a PSSCH associated with the HARQ-ACK feedback, a transmission time of a PSCCH associated with the PSSCH, or a generation time of the adjusted CW. The predefined time may be configured to the terminal(s) through signaling. The predefined time may be set on a slot basis. When HARQ-ACK feedback(s) are received on PSFCH(s) within the slot #N, the transmitting terminal may adjust the CW based on the HARQ-ACK feedback(s) and use the adjusted CW to perform an LBT operation from the slot #N+M. Each of N and M may be a natural number.

The transmitting terminal may perform SL transmission to one or more receiving terminals. The transmitting terminal may transmit a PSSCH to one or more receiving terminals based on a groupcast scheme. In other words, the transmitting terminal may perform groupcast SL transmission(s). In the groupcast SL transmission, one transmitting terminal may transmit a signal/channel to one or more receiving terminals. For the groupcast SL transmission, the communication system (e.g., network node, base station, transmitting terminal) may assign an identifier (ID) for the groupcast SL transmission to one or more terminals (e.g., transmitting terminal and/or receiving terminal(s)). The ID for the groupcast SL transmission may be referred to as a groupcast SL ID. The groupcast SL ID may be delivered to the terminal(s) through signaling (e.g., RRC signaling). The terminal(s) may receive the groupcast SL ID through signaling, and may receive a signal/channel (e.g., groupcast signal/channel) associated with the groupcast SL ID.

The transmitting terminal may generate a first-stage SCI including information required for reception of a second-stage SCI and/or information required for demodulation/decoding of a TB, and transmit the first-stage SCI on a PSCCH. The receiving terminal may receive the first-stage SCI from the transmitting terminal and identify the information (e.g., information element(s)) included in the first-stage SCI. The transmitting terminal may transmit the second-stage SCI and/or TB on a PSSCH. The receiving terminal may receive the second-stage SCI and/or TB from the transmitting terminal on the PSSCH.

The second-stage SCI may include information indicating whether to perform groupcast SL transmission. The second-stage SCI may indicate a transmission scheme of HARQ-ACK feedback for PSSCH transmission (e.g., data transmission). The transmission scheme of HARQ-ACK feedback may indicate at least one of transmission of HARQ-ACK feedback (e.g., enabling of HARQ-ACK feedback), non-transmission of HARQ-ACK feedback (e.g., disabling of HARQ-ACK feedback), ACK/NACK transmission, or NACK-only transmission. In the ACK/NACK transmission scheme, ACK or NACK may be transmitted. In the NACK-only transmission scheme, only NACK may be transmitted. In other words, in the NACK-only transmission scheme, even when ACK occurs, the ACK may not be transmitted. The receiving terminal may receive the second-stage SCI and identify whether groupcast SL transmission is to be performed based on the information included in the second-stage SCI. Additionally, the receiving terminal may identify the transmission scheme of HARQ-ACK feedback based on the information included in the second-stage SCI.

The receiving terminal may receive a groupcast PSSCH (e.g., groupcast SL transmission) from the transmitting terminal. If a destination ID included in the second-stage SCI is set to the ID for groupcast SL transmission, the receiving terminal may determine a PSSCH associated with the second-stage SCI to be the groupcast PSSCH. Alternatively, if a cast type indicator included in the second-stage SCI indicates groupcast transmission, the receiving terminal may determine a PSSCH associated with the second-stage SCI to be the groupcast PSSCH.

The receiving terminal may receive the PSSCH from the transmitting terminal and transmit a reception result of the PSSCH (e.g., HARQ-ACK feedback) to the transmitting terminal on a PSFCH. If the transmitting terminal indicates the receiving terminal not to transmit a HARQ-ACK feedback (e.g., disable HARQ-ACK feedback), the receiving terminal may not transmit a HARQ-ACK feedback for the PSSCH to the transmitting terminal.

The HARQ-ACK feedback scheme may be classified into a HARQ-ACK feedback scheme 1 and a HARQ-ACK feedback scheme 2. In the HARQ-ACK feedback scheme 1, when a PSSCH is successfully received, the receiving terminal may transmit ACK, and when reception of a PSSCH fails, the receiving terminal may transmit NACK. The HARQ-ACK feedback scheme 1 may be the ACK/NACK transmission scheme. Whether a PSSCH is successfully received may be determined depending on a demodulation/decoding result of a TB. Whether a PSSCH is successfully received may be determined based on a CRC check result. In the HARQ-ACK feedback scheme 1, the transmitting terminal may adjust a CW based on at least one of the number of ACKs, ACK ratio, number of NACKs, or NACK ratio.

In the HARQ-ACK feedback scheme 2, when a PSSCH is successfully received, the receiving terminal may not transmit ACK, and when reception of a PSSCH fails, the receiving terminal may transmit NACK (e.g., HARQ-ACK feedback). The HARQ-ACK feedback scheme 2 may be the NACK-only transmission scheme. In the HARQ-ACK feedback scheme 2, the transmitting terminal may adjust a CW based on at least one of the number of NACKs or NACK ratio. The HARQ-ACK feedback scheme 1 or HARQ-ACK feedback scheme 2 may be applied to groupcast SL transmission.

The HARQ-ACK feedback scheme may be configured by signaling (e.g., RRC signaling). The base station may transmit a signaling message including information indicating the HARQ-ACK feedback scheme to the terminal. The terminal may receive the signaling message from the base station, and identify the HARQ-ACK feedback scheme based on the information included in the signaling message. If the signaling message indicating the HARQ-ACK feedback scheme is not received, the terminal may use a default HARQ-ACK feedback scheme. The default HARQ-ACK feedback scheme may be the HARQ-ACK feedback scheme 1 or HARQ-ACK feedback scheme 2.

The HARQ-ACK feedback scheme may be indicated by control information (e.g., SCI, PHY signaling). The transmitting terminal may transmit control information including information indicating the HARQ-ACK feedback scheme to the receiving terminal. The control information may be transmitted on a PSCCH or PSSCH. The control information may be transmitted through a first-stage SCI and/or second-stage SCI. The receiving terminal may receive the control information from the transmitting terminal, and identify the HARQ-ACK feedback scheme based on the information included in the control information. If the control information indicating the HARQ-ACK feedback scheme is not received, the receiving terminal may use a default HARQ-ACK feedback scheme. The default HARQ-ACK feedback scheme may be the HARQ-ACK feedback scheme 1 or HARQ-ACK feedback scheme 2.

The transmitting terminal may adjust the CW based on HARQ-ACK feedback(s) for the groupcast SL transmission. The HARQ-ACK feedback scheme for the groupcast SL transmission may be the HARQ-ACK feedback scheme 1 or HARQ-ACK feedback scheme 2.

The transmitting terminal may perform groupcast SL transmission(s) using a PSSCH. The receiving terminal(s) may receive the groupcast SL transmission(s) from the transmitting terminal. The receiving terminal(s) receiving the groupcast SL transmission(s) may be terminal(s) participating in the groupcast SL communication. The receiving terminal(s) may transmit ACK or NACK to the transmitting terminal according to a demodulation/decoding result for the PSSCH (e.g., groupcast SL transmission(s)). The receiving terminal(s) may transmit HARQ-ACK feedback (e.g., ACK or NACK) to the transmitting terminal using a PSFCH.

The transmitting terminal may receive the HARQ-ACK feedback(s) from the receiving terminal(s) and may adjust the CW based on the HARQ-ACK feedback(s). For example, the transmitting terminal may adjust the CW based on an ACK ratio or NACK ratio for the groupcast SL transmission(s). The transmitting terminal may determine the ACK ratio based on Equation 1 described above. The transmitting terminal may determine the NACK ratio based on Equation 2 described above. The transmitting terminal may adjust the CW based on the ACK ratio. If the ACK ratio is equal to or greater than a ratio threshold, the transmitting terminal may change the CW (e.g., current CW) to the initial CW or minimum CW. Alternatively, if the ACK ratio is equal to or greater than the ratio threshold, the transmitting terminal may reduce the CW. If the ACK ratio is less than the ratio threshold, the transmitting terminal may increase the CW.

Information on the ACK ratio (or NACK ratio) and/or ratio threshold may be transmitted to the terminal through signaling. The signaling may be at least one of SI signaling, RRC signaling, MAC CE signaling, or PHY signaling. The terminal may determine a ratio threshold used for CW adjustment based on information on the ACK ratio indicated by signaling. In other words, when a ratio threshold is not explicitly indicated, the terminal may determine a ratio threshold used for CW adjustment based on the information on the ACK ratio indicated by signaling.

When the information on the ACK ratio is not indicated by signaling, the terminal may use a default threshold for CW adjustment. The default threshold may be 0. If the default threshold is used, the terminal may change the CW to the initial CW or minimum CW if at least one ACK is received. Alternatively, the terminal may reduce the CW if at least one ACK is received. If the default threshold is used, the terminal may increase the CW if at least one ACK is not received.

The transmitting terminal may adjust the CW based on a ratio of ACKs or NACKs to the total number of HARQ-ACK feedbacks for the PSSCH (e.g., groupcast SL transmission). If the ACK ratio is equal to or greater than a specific predefined threshold, the transmitting terminal may change the CW to the initial CW or minimum CW. Alternatively, if the ACK ratio is equal to or greater than a specific predefined threshold, the transmitting terminal may reduce the CW. If the ACK ratio is less than a specific predefined threshold, the transmitting terminal may increase the CW. If the NACK ratio is equal to or greater than a specific predefined threshold, the transmitting terminal may increase the CW. If the NACK ratio is less than a specific predefined threshold, the transmitting terminal may change the CW to the initial CW or the minimum CW. Alternatively, if the NACK ratio is less than a specific predefined threshold, the transmitting terminal may reduce the CW.

When one or more ACKs for the PSSCH (e.g., groupcast SL transmission) are received, the transmitting terminal may change the CW to the initial CW or minimum CW. Alternatively, when one or more ACKs for the PSSCH (e.g., groupcast SL transmission) are received, the transmitting terminal may reduce the CW. When one or more ACKs for the PSSCH (e.g., groupcast SL transmission) are not received, the transmitting terminal may increase the CW. When one or more NACKs for the PSSCH (e.g., groupcast SL transmission) are received, the transmitting terminal may increase the CW.

When the transmitting terminal indicates the receiving terminal not to transmit HARQ-ACK feedback (e.g., disable HARQ-ACK feedback), the transmitting terminal may maintain the CW (e.g., current CW) regardless of HARQ-ACK feedback(s) for the PSSCH.

The transmitting terminal may perform groupcast SL transmission(s) using a PSSCH. The receiving terminal(s) may receive the groupcast SL transmission(s) from the transmitting terminal. When the HARQ-ACK feedback scheme 2 (e.g., NACK-only transmission scheme) is used, the receiving terminal(s) may transmit NACK to the transmitting terminal according to a demodulation/decoding result of the PSSCH. The receiving terminal(s) may transmit NACK to the transmitting terminal using a PSFCH. Alternatively, the receiving terminal(s) may not transmit a HARQ-ACK feedback (e.g., ACK) to the transmitting terminal according to a demodulation/decoding result of the PSSCH.

The transmitting terminal may adjust the CW based on the HARQ-ACK feedback(s) for the PSSCH (e.g., groupcast SL transmission(s)). For example, the transmitting terminal may adjust the CW based on a ratio between the number of receiving terminals receiving the PSSCH and the received NACK(s). The transmitting terminal may calculate the NACK ratio based on Equation 2 described above.

If the NACK ratio is equal to or greater than a specific predefined threshold, the transmitting terminal may increase the CW. If the NACK ratio is less than a specific predefined threshold, the transmitting terminal may change the CW to the initial CW or the minimum CW. Alternatively, if the NACK ratio is less than a specific predefined threshold, the transmitting terminal may reduce the CW.

If not even one NACK for the PSSCH is received, the transmitting terminal may change the CW to the initial CW or minimum CW. Alternatively, if not even one NACK for the PSSCH is received, the transmitting terminal may reduce the CW. When NACKs for the PSSCH are received from all receiving terminals, the transmitting terminal may increase the CW. If the number of received NACKs is less than or equal to a predefined threshold, the transmitting terminal may change the CW to the initial CW or minimum CW. Alternatively, if the number of received NACKs is less than or equal to a predefined threshold, the transmitting terminal may reduce the CW. If the number of received NACKs exceeds a predefined threshold, the transmitting terminal may increase the CW. If not even one NACK for the PSSCH is received, the transmitting terminal may maintain the CW (e.g., current CW). If even one NACK for the PSSCH is received, the transmitting terminal may increase the CW.

When the HARQ-ACK feedback scheme 2 is used, the transmitting terminal may maintain the CW (e.g., current CW) regardless of HARQ-ACK feedback(s) for the PSSCH. The current CW may be a CW used for the most recent LBT operation (e.g., the most recent type 1 LBT operation). The transmitting terminal may maintain the CWs (e.g., current CWs) for all priority classes.

When the transmitting terminal indicates the receiving terminal not to transmit HARQ-ACK feedback (e.g., disable HARQ-ACK feedback), the transmitting terminal may maintain the CW (e.g., current CW) regardless of HARQ-ACK feedback(s) for the PSSCH.

The transmission of the terminal (e.g., transmitting terminal) may not require HARQ-ACK feedback. In other words, transmission of ACK or NACK according to the HARQ-ACK feedback scheme 1 may not be required. The transmission of the terminal may not satisfy requirements of a reference duration for CW adjustment.

The terminal may perform a type 1 LBT operation for transmission. The terminal may perform transmission with a specific priority class e. The terminal may perform a type 1 LBT operation for a current transmission based on a CW used in the most recent transmission for the priority class e. If transmission with the priority class e has not been performed, the terminal may perform the type 1 LBT operation using an initial CW or minimum CW defined for the priority class e.

After transmission with the priority class e is performed, the terminal may maintain the CW of the priority class e to be the same as the CW of the previous transmission. If the same CW is used more than a predefined number of times, the terminal may increase the CW. If the same CW is used r times, the terminal may increase the CW. r may be a predefined value. r may be variable depending on a configuration of the communication system. r may be informed to the terminal through signaling (e.g., higher layer signaling). r may be a natural number. When the CW increases, the terminal may increase the CWs for all priority classes. In other words, if it is determined to increase the CW for one priority class, the terminal may increase the CWs for all priority classes.

If a CW (e.g., maximum CW) for a type 1 LBT operation for a priority class t is used more than a predefined number of times (y), the terminal may change the CW for the priority class t to the initial CW or minimum CW. The predefined number y may be set differently for each priority class. y may be a predefined value. y may be variable depending on a configuration of the communication system. y may be informed to the terminal through signaling (e.g., higher layer signaling). y may vary depending on the implementation of the terminal. y may be a natural number. For example, y may be a natural number of 1 to 8.

A terminal (e.g., receiving terminal) that will transmit a HARQ-ACK feedback for groupcast SL transmission may be indicated or configured. The transmitting terminal may inform a receiving terminal of location information of the transmitting terminal. The transmitting terminal may inform the receiving terminal of an identifier (ID) of an area (e.g., zone) to which the transmitting terminal belongs. The transmitting terminal may transmit an SCI including the location information of the transmitting terminal. The receiving terminal may receive the location information of the transmitting terminal and identify the location of the transmitting terminal based on the location information. The receiving terminal may identify the location of the transmitting terminal based on the ID of the area to which the transmitting terminal belongs.

The transmitting terminal may inform the receiving terminal of a communication distance requirement with respect to transmission of the transmitting terminal. The transmitting terminal may transmit the SCI including information on the communication distance requirement. The receiving terminal may identify the communication distance requirement of the transmitting terminal, and identify a transmission range of the transmitting terminal based on the communication distance requirement.

The receiving terminal may identify a transmission coverage of the transmitting terminal based on the location information and communication distance requirement of the transmitting terminal. The receiving terminal may identify whether the receiving terminal is within the transmission coverage of the transmitting terminal by using location information of the receiving terminal.

The transmitting terminal may use different SCIs to determine a range of receiving terminals that will transmit HARQ-ACK feedbacks. The transmitting terminal may use an SCI format A (e.g., SCI format 1-A and/or SCI format 2-A) to allow all receiving terminals receiving a PSSCH to transmit HARQ-ACK feedbacks for the PSSCH. The receiving terminal the receives the PSSCH using the SCI format A may transmit a HARQ-ACK feedback for the PSSCH to the transmitting terminal.

The transmitting terminal may use an SCI format B (e.g., SCI format 2-B) to allow receiving terminal(s) within a specific range (e.g., transmission coverage) among receiving terminals receiving a PSSCH to transmit HARQ-ACK feedback(s) for the PSSCH. The receiving terminal that receives the PSSCH using the SCI format B may determine whether it is within the transmission coverage of the transmitting terminal. If the receiving terminal is within the transmission coverage of the transmitting terminal, the receiving terminal may transmit a HARQ-ACK feedback for the PSSCH to the transmitting terminal. If the receiving terminal is not within the transmission coverage of the transmitting terminal, the receiving terminal may not transmit a HARQ-ACK feedback for the PSSCH to the transmitting terminal. To determine whether the receiving terminal is within the transmission coverage of the transmitting terminal, the receiving terminal may use at least one of location information of the transmitting terminal, communication distance requirement of the transmitting terminal, or location information of the receiving terminal.

The receiving terminal may perform a demodulation/decoding operation for the PSSCH using the SCI format B. If the receiving terminal is within the transmission coverage of the transmitting terminal, the receiving terminal may transmit a HARQ-ACK feedback for the PSSCH to the transmitting terminal. If the receiving terminal is not within the transmission coverage of the transmitting terminal, the receiving terminal may not transmit a HARQ-ACK feedback for the PSSCH to the transmitting terminal.

The transmitting terminal may receive one or more HARQ-ACK feedbacks for one or more groupcast SL transmissions from one or more receiving terminals on PSFCH(s) within the same slot. The transmitting terminal may adjust the CW using HARQ-ACK feedback(s) for the most recent groupcast SL transmission among the one or more HARQ-ACK feedbacks. The transmitting terminal may receive a HARQ-ACK feedback #N for a PSSCH (e.g., groupcast SL transmission) transmitted in a slot #N and a HARQ-ACK feedback #N+M for a PSSCH (e.g., groupcast SL transmission) transmitted in a slot #N+M on PSFCH(s) within the same slot. In this case, the transmitting terminal may adjust the CW using the HARQ-ACK feedback #N+M among the HARQ-ACK feedback #N and the HARQ-ACK feedback #N+M. The CW adjustment operation may be performed when a CAPC of the PSSCH transmitted in the slot #N is the same as a CAPC of the PSSCH transmitted in the slot #N+M. When the CAPC of the PSSCH transmitted in the slot #N is different from the CAPC of the PSSCH transmitted in the slot #N+M, the transmitting terminal may adjust the CW for each CAPC based on the HARQ-ACK feedback for the PSSCH corresponding to each CAPC. Each of N and M may be a natural number.

The transmitting terminal may receive one or more HARQ-ACK feedbacks for one or more groupcast SL transmissions from one or more receiving terminals on PSFCH(s) within the same slot. The transmitting terminal may receive HARQ-ACK feedbacks for groupcast SL transmissions discontinuous in the time domain on PSFCH(s) within the same slot. In this case, the transmitting terminal may individually adjust the CW based on each of the HARQ-ACK feedbacks for the groupcast SL transmissions discontinuous in the time domain. When a HARQ-ACK feedback #N for a PSSCH (e.g., groupcast SL transmission) transmitted in a slot #N and a HARQ-ACK #N+M for a PSSCH (e.g., groupcast SL transmission) transmitted in a slot #N+M are received on PSFCH(s) within the same slot, the transmitting terminal may adjust the CW using the HARQ-ACK feedback #N, and adjust the adjusted CW (e.g., the CN adjusted based on the HARQ-ACK feedback #N) again based on the HARQ-ACK feedback #N+M. Each of N and M may be a natural number.

The transmitting terminal may receive HARQ-ACK feedbacks for groupcast SL transmissions continuous in the time domain on PSFCH(s) within the same slot. The groupcast SL transmissions may be performed in consecutive slots. In this case, the transmitting terminal may adjust the CW using a HARQ-ACK feedback for a groupcast SL transmission performed first among the HARQ-ACK feedbacks. For example, when HARQ-ACK feedbacks for continuous groupcast SL transmissions in the slot #N, slot #N+1, ... , and slot #N+M are received on PSFCH(s) within the same slot, the transmitting terminal may adjust the CW using the HARQ-ACK feedback for the groupcast SL transmission in the slot #N.

The transmitting terminal may adjust the CW based on HARQ-ACK feedback(s) for PSSCH transmission (e.g., groupcast SL transmission) in a reference period. The reference period may belong to the COT initiated by the transmitting terminal. The reference period may mean a reference duration.

A start time of the reference duration may be a start time of transmission of the transmitting terminal, which starts at a start time of channel occupancy (e.g., COT). An end time of the reference duration may be an end time of a slot after the start time of the reference duration. Alternatively, the end time of the reference duration may be an end time of the transmission of the transmitting terminal, which starts at the start time of channel occupancy.

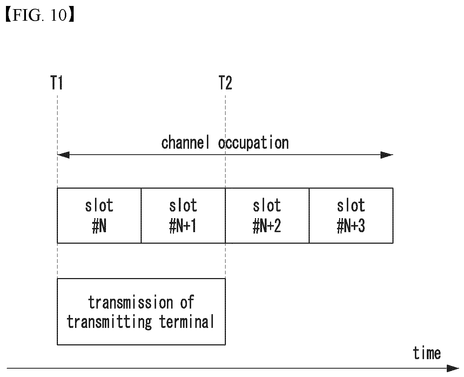

FIG. 10 is a conceptual diagram illustrating a first exemplary embodiment of a reference duration within channel occupancy.

Referring to FIG. 10, transmission (e.g., groupcast SL transmission) of the transmitting terminal may start at a start time T1 of channel occupancy (e.g., COT). A start time of a reference duration may be T1. An end time of the reference duration may be an end time of a slot (e.g., the first slot) after the start time T1 of the reference duration. In this case, the end time of the reference duration may be an end time of a slot #N. When the start time of the reference duration is T1 and the end time of the reference duration is the end time of the slot #N, the reference duration may be the slot #N. Alternatively, the end time of the reference duration may be an end time of the transmission of the transmitting terminal, which starts at the start time T1 of channel occupancy. In this case, the end time of the reference duration may be T2. Therefore, the reference duration may be a period corresponding to the slot #N and the slot #N+1.

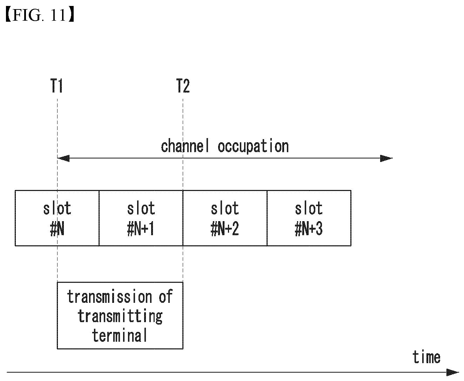

FIG. 11 is a conceptual diagram illustrating a second exemplary embodiment of a reference duration within channel occupancy.

Referring to FIG. 11, transmission (e.g., groupcast SL transmission) of the transmitting terminal may start at a start time T1 of channel occupancy (e.g., COT). A start time of a reference duration may be T1. An end time of the reference duration may be an end time of a slot (e.g., the first slot) after the start time T1 of the reference duration. In this case, the end time of the reference duration may be an end time of a slot #N. When the start time of the reference duration is T1 and the end time of the reference duration is the end time of the slot #N, the reference duration may be a period from T1 to the end time of the slot #N. Alternatively, the end time of the reference duration may be an end time of the transmission of the transmitting terminal, which starts at the start time T1 of channel occupancy. In this case, the end time of the reference duration may be T2. Therefore, the reference duration may be a period from T1 to T2 (e.g., an end time of slot #N+1).

When one or more unicast SL transmissions are performed within a time period, and HARQ feedback for the one or more unicast SL transmissions is enabled, and/or when one or more groupcast SL transmissions are performed within a time period and HARQ feedback for the one or more groupcast SL transmissions is enabled, the time period may be interpreted as a reference duration. The transmitting terminal may adjust a CW based on HARQ-ACK feedback(s) for transmission(s) in the time period (e.g., reference duration). Enabling HARQ feedback may mean activation of HARQ feedback and/or use of the HARQ-ACK feedback scheme 1 (e.g., ACK/NACK transmission scheme).

When unicast SL transmission with HARQ feedback enabled is not performed within a time period and/or when groupcast SL transmission with HARQ feedback enabled is not performed within a time period, the time period may not be a reference duration. The transmitting terminal may not use HARQ-ACK feedback for transmissions in the time period (e.g., period other than the reference duration) for CW adjustment.

The start time of the reference duration may be the same as the start time of channel occupancy. A channel occupancy time (COT) may include PSSCH transmission. The end time of the reference duration may be an end time of the first slot in which PSSCH transmission to which the HARQ-ACK feedback scheme 1 (e.g., ACK/NACK transmission scheme) is applied is performed. In the exemplary embodiment of FIG. 10, the start time of the reference duration may be the start time T1 of the channel occupancy time. The end time of the reference duration may be determined according to a position of the first PSSCH transmission to which the HARQ-ACK feedback scheme 1 is applied. When the PSSCH transmission to which the HARQ-ACK feedback scheme 1 is applied is performed in the slot #N, the end time of the reference duration may be an end time of the slot #N.

When PSSCH transmission to which the HARQ-ACK feedback scheme 1 is applied is not performed in the slot #N, and PSSCH transmission to which the HARQ-ACK feedback scheme 1 is applied is performed in the slot #N+1, the end time of the reference duration may be the end time of the slot #N+1. When PSSCH transmission to which the HARQ-ACK feedback scheme 1 is applied does not occur within the channel occupancy time, there may be no reference duration within the channel occupancy time. If a reference duration does not exist, the CW may be maintained. In other words, if a reference duration does not exist, the CW may not be adjusted.

The methods according to the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

**Claims**

1. A method of a first terminal, comprising:

    initiating a channel occupancy time (COT);
    performing groupcast sidelink (SL) transmission within the COT;
    receiving one or more hybrid automatic repeat request-acknowledgement (HARQ-ACK) feedbacks for the groupcast SL transmission;
    in response to a ratio threshold being configured to the first terminal, calculating an ACK ratio based on the one or more HARQ-ACK feedbacks; and
    adjusting a content window (CW) based on a comparison result between the ACK ratio and the ratio threshold.

2. The method according to claim 1, wherein the one or more HARQ-ACK feedbacks considered for adjustment of the CW are one or more HARQ-ACK feedbacks for the groupcast SL transmission performed within a most recent COT initiated by the first terminal among COTs.

3. The method according to claim 1, wherein the one or more HARQ-ACK feedbacks considered for adjustment of the CW are one or more HARQ-ACK feedbacks for the groupcast SL transmission performed in a reference duration within a most recent COT initiated by the first terminal among COTs.

4. The method according to claim 1, wherein HARQ-ACK feedbacks for the groupcast SL transmission are enabled.

5. The method according to claim 1, wherein the one or more HARQ-ACK feedbacks are received on physical sidelink feedback channel(s) (PSFCH(s)) within a same slot.

6. The method according to claim 1, wherein the adjusting of the CW comprises: changing the CW to a minimum CW when the ACK ratio is greater than or equal to the ratio threshold.

7. The method according to claim 1, wherein the adjusting of the CW comprises: reducing the CW when the ACK ratio is greater than or equal to the ratio threshold.

8. The method according to claim 1, wherein the adjusting of the CW comprises: increasing the CW when the ACK ratio is less than the ratio threshold.

9. The method according to claim 8, wherein the CWs for all priority classes are increased.

10. The method according to claim 1, wherein when the ratio threshold is not configured to the first terminal, the calculating of the ACK ratio is not performed, and when the one or more HARQ-ACK feedbacks include at least one ACK, the CW is changed to a minimum CW.

11. The method according to claim 1, wherein the ACK ratio is a ratio between ACK(s) among the one or more HARQ-ACK feedbacks and a number of terminals expected to transmit HARQ-ACK feedbacks for the groupcast SL transmission.

12. The method according to claim 1, wherein the ACK ratio is a ratio between ACK(s) among the one or more HARQ-ACK feedbacks and a number of HARQ-ACK feedbacks expected for the groupcast SL transmission.

13. The method according to claim 12, wherein when a negative ACK (NACK)-only transmission scheme is used, a HARQ-ACK feedback not received at the transmitting terminal among the expected HARQ-ACK feedbacks is considered as ACK.

14. A method of a first terminal, comprising:

initiating a channel occupancy time (COT);
performing groupcast sidelink (SL) transmission within the COT;
receiving one or more hybrid automatic repeat request-acknowledgement (HARQ-ACK) feedbacks for the groupcast SL transmission;
in response to a ratio threshold being configured to the first terminal, calculating a negative ACK (NACK) ratio based on the one or more HARQ-ACK feedbacks; and
adjusting a content window (CW) based on a comparison result between the NACK ratio and the ratio threshold.

15. The method according to claim 14, wherein the one or more HARQ-ACK feedbacks considered for adjustment of the CW are one or more HARQ-ACK feedbacks for the groupcast SL transmission performed in a reference duration within a most recent COT initiated by the first terminal among COTs.

16. The method according to claim 14, wherein in the adjusting of the CW, the first terminal changes the CW to a minimum CW when the NACK ratio is less than the ratio threshold, and increases the CW when the NACK ratio is equal to or greater than the ratio threshold.

17. The method according to claim 14, wherein the NACK ratio is a ratio between NACK(s) among the one or more HARQ-ACK feedbacks and a number of terminals expected to transmit HARQ-ACK feedbacks for the groupcast SL transmission or a ratio between NACK(s) among the one or more HARQ-ACK feedbacks and a number of HARQ-ACK feedbacks expected for the groupcast SL transmission.

18. A first terminal comprising at least one processor, wherein the at least one processor causes the first terminal to perform:

initiating a channel occupancy time (COT);
performing groupcast sidelink (SL) transmission within the COT;
receiving one or more hybrid automatic repeat request-acknowledgement (HARQ-ACK) feedbacks for the groupcast SL transmission;
in response to a ratio threshold being configured to the first terminal, calculating an ACK ratio based on the one or more HARQ-ACK feedbacks; and
adjusting a content window (CW) based on a comparison result between the ACK ratio and the ratio threshold.

19. The first terminal according to claim 18, wherein in the adjusting of the CW, the at least one processor causes the first terminal to perform:

changing the CW to a minimum CW when the NACK ratio is less than the ratio threshold; and
increasing the CW when the NACK ratio is equal to or greater than the ratio threshold.

20. The first terminal according to claim 18, wherein the ACK ratio is a ratio between ACK(s) among the one or more HARQ-ACK feedbacks and a number of terminals expected to transmit HARQ-ACK feedbacks for the groupcast SL transmission, or a ratio between ACK(s) among the one or more HARQ-ACK feedbacks and a number of HARQ-ACK feedbacks expected for the groupcast SL transmission.

【FIG. 1】

110

120          SL communication          130

【FIG. 2】

200

220

210

memory

ROM    RAM

processor

input
interface
device          240

output
interface
device          250

270

storage
device          260

transceiver          230

【FIG. 3】

【FIG. 4】

subframe（1ms）

| slot #0 | slot #1 | ... | slot #n |

【FIG. 5】

slot

| #0 | #1 | #2 | #3 | #4 | #5 | #6 | #7 | #8 | #9 | #10 | #11 | #12 | #13 |

OFDM symbol

【FIG. 6】

【FIG. 7】

EP 4 598 246 A1

SSB subcarriers ↕ ⬚ : PSBCH, S-PSS, S-SSS

▨ : sidelink resource pool

subchannel ↕ ▢ : PSCCH, PSSCH

subchannel ↕ ▢▮ : PSCCH, PSSCH, PSFCH

frequency

slot

SL BWP

time

【FIG. 8】

【FIG. 9】

【FIG. 10】

【FIG. 11】

T1              T2

channel occupation

| slot #N | slot #N+1 | slot #N+2 | slot #N+3 |

transmission of transmitting terminal

time

# EP 4 598 246 A1

<table>
<tr><td colspan="2"><b>INTERNATIONAL SEARCH REPORT</b></td><td>International application No.<br><br><b>PCT/KR2023/014389</b></td></tr>
</table>

| | |
|---|---|
| **A.** | **CLASSIFICATION OF SUBJECT MATTER** |

**H04W 74/08**(2009.01)i; **H04W 72/25**(2023.01)i; **H04W 24/08**(2009.01)i; **H04L 1/18**(2006.01)i; **H04W 92/18**(2009.01)i; **H04W 72/20**(2023.01)i; **H04W 72/12**(2009.01)i

According to International Patent Classification (IPC) or to both national classification and IPC

| | |
|---|---|
| **B.** | **FIELDS SEARCHED** |

Minimum documentation searched (classification system followed by classification symbols)

H04W 74/08(2009.01); H04L 1/16(2006.01); H04L 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 그룹캐스트(groupcast), HARQ-ACK, 피드백 (feedback), 경합 윈도우 사이즈 조정(adjust contention window size), ACK/NACK 카운트(count)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | LG ELECTRONICS. Discussion on channel access mechanism for sidelink on unlicensed spectrum. R1-2203713, 3GPP TSG RAN WG1 Meeting #109-e, e-Meeting. 29 April 2022.<br>    See pages 2-3 and 5-7. | 1-20 |
| Y | MODERATOR (OPPO). FL summary #1 for AI 9.4.1.1: SL-U channel access mechanism. R1-2207789, 3GPP TSG RAN WG1 #110. Toulouse, France. 28 August 2022.<br>    See pages 45-46 and 51. | 1-20 |
| A | KR 10-2020-0111232 A (GUANGDONG OPPO MOBILE TELECOMMUNICATIONS CORP., LTD.) 28 September 2020 (2020-09-28)<br>    See paragraphs [0080]-[0145]; and figure 2. | 1-20 |
| A | KR 10-2022-0091484 A (QUALCOMM INCORPORATED) 30 June 2022 (2022-06-30)<br>    See claims 1-6. | 1-20 |
| A | WO 2020-146607 A1 (APPLE INC.) 16 July 2020 (2020-07-16)<br>    See paragraphs [0102]-[0106]; and figure 5. | 1-20 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 January 2024** | **18 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014389**

| Patent document cited in search report | | | Publication date (day/month/year) | Patent family member(s) | | | Publication date (day/month/year) |
|---|---|---|---|---|---|---|---|
| KR | 10-2020-0111232 | A | 28 September 2020 | AU | 2018-406782 | A1 | 10 September 2020 |
| | | | | CN | 111630929 | A | 04 September 2020 |
| | | | | CN | 113438745 | A | 24 September 2021 |
| | | | | EP | 3749045 | A1 | 09 December 2020 |
| | | | | EP | 3749045 | A4 | 23 December 2020 |
| | | | | JP | 2021-516482 | A | 01 July 2021 |
| | | | | JP | 7117387 | B2 | 12 August 2022 |
| | | | | US | 11317437 | B2 | 26 April 2022 |
| | | | | US | 11350446 | B2 | 31 May 2022 |
| | | | | US | 11729819 | B2 | 15 August 2023 |
| | | | | US | 2020-0374922 | A1 | 26 November 2020 |
| | | | | US | 2022-0225404 | A1 | 14 July 2022 |
| | | | | WO | 2019-148443 | A1 | 08 August 2019 |
| KR | 10-2022-0091484 | A | 30 June 2022 | BR | 112022007990 | A2 | 05 July 2022 |
| | | | | CN | 114616913 | A | 10 June 2022 |
| | | | | EP | 4055744 | A1 | 14 September 2022 |
| | | | | JP | 2023-500473 | A | 06 January 2023 |
| | | | | US | 2022-0399964 | A1 | 15 December 2022 |
| | | | | WO | 2021-092614 | A1 | 14 May 2021 |
| WO | 2020-146607 | A1 | 16 July 2020 | CN | 112534941 | A | 19 March 2021 |
| | | | | CN | 113396552 | A | 14 September 2021 |
| | | | | EP | 3891915 | A1 | 13 October 2021 |
| | | | | JP | 2022-517942 | A | 11 March 2022 |
| | | | | JP | 7219345 | B2 | 07 February 2023 |
| | | | | US | 2021-0298075 | A1 | 23 September 2021 |
| | | | | US | 2022-0085924 | A1 | 17 March 2022 |
| | | | | US | 2022-0109532 | A1 | 07 April 2022 |
| | | | | US | 2022-0312481 | A1 | 29 September 2022 |
| | | | | WO | 2020-033505 | A1 | 13 February 2020 |
| | | | | WO | 2020-167851 | A1 | 20 August 2020 |
| | | | | WO | 2020-191309 | A1 | 24 September 2020 |

Form PCT/ISA/210 (patent family annex) (July 2022)